# EUROPEAN PATENT APPLICATION

(11) **EP 4 184 924 A1**
(43) Date of publication of application: **24.05.2023**
(21) Application number: 21850527.9
(22) Date of filing: 28.07.2021
(51) Int. Cl.: H04N 21/43

(54) **NETWORK LIVE BROADCAST INTERACTION METHOD AND DEVICE**

(30) Priority: 31.07.2020 CN 202010760512
(71) Applicant: Huawei Technologies Co., Ltd., Shenzhen, Guangdong 518129 (CN)
(72) Inventor: YANG, Yong, Shenzhen, Guangdong 518129 (CN); WU, Liang, Shenzhen, Guangdong 518129 (CN); ZHU, Yongping, Shenzhen, Guangdong 518129 (CN); WU, Hao, Shenzhen, Guangdong 518129 (CN); LIU, Hongbo, Shenzhen, Guangdong 518129 (CN)
(74) Representative: MERH-IP Matias Erny Reichl Hoffmann Patentanwälte PartG mbB
(86) International application number: PCT/CN2021/108984
(87) International publication number: WO 2022/022580

(57) **Abstract**

Embodiments of this application provide a live streaming interaction method and a device, to implement in-depth interaction of a special audience in live streaming. According to the method, in a process of broadcasting a live video, a first terminal device may draw a graphical element in a first specified display area in which the first terminal device displays the live video, to implement a drawing function. Another second terminal device that plays the live video may synchronously draw a graphical element in a second specified display area in which the second terminal device displays the live video. Because the live streaming interaction method supports synchronous drawing in specified display areas for displaying the live video on a plurality of terminal devices and is not limited to a current simple interaction form, the live streaming interaction method may implement in-depth interaction between a special audience and another common audience in the live streaming. Finally, a commentator may comment on content of the live video by drawing, so that a live streaming interaction manner is flexible.

## Description

### CROSS-REFERENCE TO RELATED APPLICATIONS

This application claims priority to Chinese Patent Application No. 202010760512.3, filed with the China National Intellectual Property Administration on July 31, 2020 and entitled "LIVE STREAMING INTERACTION METHOD AND DEVICE", which is incorporated herein by reference in its entirety.

### TECHNICAL FIELD

This application relates to the field of communication technologies, and in particular, to a live streaming interaction method and a device.

### BACKGROUND

In recent years, with the continuous progress of information technologies, information communication through network media is a development trend and an important symbol of modern society development. One way of network media communication is live streaming. Because of its wide audience, simple and diverse access methods, strong interaction, and strong spatial-temporal adaptability, the live streaming is more popular. Based on content or scenarios of the live streaming, the live streaming may be classified into the following types: video game live streaming, education live streaming, conference live streaming, e-commerce live streaming, entertainment live streaming, and the like.

In a process of watching various live streaming, an audience may interact with a host or another audience. Currently, interaction manners include the following.

Manner 1: The audience enters comment information, including a text, a picture, and the like, in a comment area that is in a lower part of a live streaming screen.

Manner 2: The audience may further send a bullet screen and other brief comment information on the live streaming screen, including a text, animated sound effects such as applause and whistle, and various gifts.

However, the foregoing interaction manners are simple, and cannot meet in-depth interaction requirements of different audiences in live streaming.

### SUMMARY

This application provides a live streaming interaction method and a device, to implement in-depth interaction of a special audience in live streaming.

According to a first aspect, an embodiment of this application provides a live streaming interaction method. The method is performed by an audience-side terminal device having a commentator permission. The terminal device is referred to as a first terminal device for short below. The method includes the following steps.

The first terminal device displays a live video in a specified display area of a display screen. After detecting a first drawing operation performed by a user on a target graphical element in the specified display area, the first terminal device displays first drawing content of the target graphical element in the specified display area in response to the first drawing operation, where the first drawing content is drawing content corresponding to the first drawing operation. The first terminal device sends first drawing event information of the target graphical element to a comment server, where the first drawing event information indicates the first drawing operation.

According to the method, the comment server may generate a first target graphical element drawing instruction based on the received first drawing event information, and send the first target graphical element drawing instruction to a second terminal device, so that the second terminal device may also display, according to the received first target graphical element drawing instruction, the first drawing content of the target graphical element in a specified display area in which the second terminal device displays the live video. Clearly, according to the method, in a process of broadcasting the live video, the first terminal device may draw a graphical element in a first specified display area in which the first terminal device displays the live video, to implement a drawing function. The second terminal device that plays the live video may synchronously draw a graphical element in a second specified display area in which the second terminal device displays the live video. Because the live streaming interaction method supports synchronous drawing in specified display areas for displaying the live video on a plurality of terminal devices and is not limited to a current simple interaction form, the live streaming interaction method may implement in-depth interaction between a special audience and another common audience in live streaming. Finally, a commentator may comment on content of the live video by drawing, so that a live streaming interaction manner is flexible.

In a possible design, the first drawing event information includes a first drawing event identifier, a first live streaming timestamp, and an identifier of the target graphical element. The first drawing event identifier represents the first drawing operation, the first live streaming timestamp represents play time of the live video when the user performs the first drawing operation, and the identifier of the target graphical element represents that the first drawing operation corresponds to the target graphical element.

In a possible design, the first drawing event information further includes a location that a cursor or a touch point has in the specified display area when the user performs the first drawing operation.

According to this design, after receiving the first drawing event information, the comment server may generate the first target graphical element drawing instruction including vertex coordinates of the target graphical element, so that after receiving the first target graphical element drawing instruction, the second terminal device can determine a drawing location based on the vertex coordinates, to implement synchronization of drawing locations of the target graphical element on the first terminal device and the second terminal device.

In a possible design, after activating a drawing function, the first terminal device may further receive a drawing identifier allocated by the comment server to the first terminal device, and generate the identifier of the target graphical element based on the drawing identifier.

According to this design, the comment server may allocate a unique drawing identifier in an entire network to the first terminal device, so that an identifier that is of a target graphical element and that is generated by the first terminal device based on the drawing identifier is also unique in the entire network, and therefore, an identifier conflict is avoided.

In a possible design, the first terminal device may display the first drawing content of the target graphical element in the specified display area by using the following steps.

The first terminal device determines the location that the cursor or the touch point has in the specified display area when the user performs the first drawing operation. The first terminal device displays the first drawing content of the target graphical element in the specified display area based on the location that the cursor or the touch point has in the specified display area.

According to this design, the first terminal device may determine a drawing location based on the drawing operation of the user, to display the first drawing content at the drawing location.

In a possible design, the first terminal device displays the live video at a first layer of the specified display area. The first terminal device displays the first drawing content of the target graphical element at a second layer of the specified display area, where the second layer is located above the first layer.

The second layer is a transparent layer. In this way, the target graphical element can be drawn on the live video.

In a possible design, that the first terminal device displays the first drawing content of the target graphical element in the specified display area includes the following steps.

The first terminal device generates a first target graphical element drawing instruction based on the first drawing event information.

The first terminal device displays the first drawing content of the target graphical element in the specified display area according to the first target graphical element drawing instruction.

In a possible design, before the first terminal device displays the first drawing content of the target graphical element in the specified display area, the first terminal device may draw a screen image based on a target graphical element object in a graphical element display queue and a preset period, and refresh the screen image on the display screen, to enable second drawing content of the target graphical element to be displayed in the specified display area. The target graphical element object is used to maintain target graphical element drawing information of the target graphical element, the target graphical element object includes second target graphical element drawing information, and the second target graphical element drawing information is used to draw the second drawing content.

According to this design, the first terminal device may draw the screen image based on the target graphical element object in the graphical element display queue and refresh the screen image, to draw, on the display screen, the drawing content of the target graphical element drawing information that is already included in the target graphical element object.

In a possible design, that the first terminal device displays the first drawing content of the target graphical element in the specified display area according to the first target graphical element drawing instruction includes the following steps.

The first terminal device generates first target graphical element drawing information according to the first target graphical element drawing instruction, where the first target graphical element drawing information is used to draw the first drawing content.

The first terminal device updates the generated first target graphical element drawing information into the target graphical element object in the graphical element display queue.

The first terminal device draws the screen image based on the target graphical element object in the graphical element display queue and the preset period, and refreshes the screen image on the display screen, to enable the first drawing content and the second drawing content of the target graphical element to be displayed in the specified display area.

According to this design, each time after generating one piece of target graphical element drawing information, the first terminal device adds each piece of the generated target graphical element drawing information to the target graphical element object in the graphical element display queue. In this way, the first terminal device continuously draws the screen image based on the target graphical element object in the graphical element display queue and the preset period, and refreshes the screen image on the display screen, so that a drawing process of the target graphical element is displayed in the specified display area. In this manner, the first terminal device may display a drawing process of a target image in real time, and may display a dynamic drawing process of the target graphical element from scratch in chronological order.

In a possible design, the first terminal device may further perform life cycle management for the target graphical element object in the graphical element display queue. When the first terminal device determines that a life cycle of the target graphical element object expires, the first terminal device generates a target graphical element deletion instruction; and the first terminal device deletes the target graphical element object in the graphical element display queue according to the target graphical element deletion instruction.

According to this design, the first terminal device may no longer display the target graphical element after the life cycle of the target graphical element object expires, to avoid impact of the target graphical element on watching of the live video by the user.

In a possible design, the first drawing operation includes at least one or a combination of the following: a press operation, a drag operation, an uplift operation, a tap operation, a double-tap operation, an undo operation, and a delete operation.

According to this design, flexibility of the user's impromptu drawing operation on the target graphical element can be improved.

In a possible design, when the first drawing operation is the undo operation, the first drawing content is deleting drawing content corresponding to a second drawing operation, where the second drawing operation is n drawing operations performed by the user on the target graphical element before the first drawing operation, and n is an integer greater than or equal to 1.

When the first drawing operation is the delete operation, the first drawing content is deleting drawing content corresponding to a third drawing operation. The third drawing operation is all drawing operations performed by the user on the target graphical element before the first drawing operation.

According to a second aspect, an embodiment of this application provides a live streaming interaction method. The method is performed by a comment server. The comment server may also be referred to as a server for short. The method includes the following steps.

After receiving first drawing event information from a first terminal device, the comment server generates a first target graphical element drawing instruction based on the first drawing event information. The first target graphical element drawing instruction instructs to display first drawing content of a target graphical element, and the first drawing content is drawing content corresponding to a first drawing operation performed by a user of the first terminal device on the target graphical element. The comment server sends the first target graphical element drawing instruction to a second terminal device.

According to the method, the comment server may generate a first target graphical element drawing instruction based on the received first drawing event information, and send the first target graphical element drawing instruction to a second terminal device, so that the second terminal device may also display, according to the received first target graphical element drawing instruction, the first drawing content of the target graphical element in a specified display area in which the second terminal device displays the live video. Clearly, according to the method, in a process of broadcasting the live video, the first terminal device may draw a graphical element in a first specified display area in which the first terminal device displays the live video, to implement a drawing function. The second terminal device that plays the live video may synchronously draw a graphical element in a second specified display area in which the second terminal device displays the live video. Because the live streaming interaction method supports synchronous drawing in specified display areas for displaying the live video on a plurality of terminal devices and is not limited to a current simple interaction form, the live streaming interaction method may implement in-depth interaction between a special audience and another common audience in live streaming. Finally, a commentator may comment on content of the live video by drawing, so that a live streaming interaction manner is flexible.

In a possible design, the first drawing event information includes a first drawing event identifier, a first live streaming timestamp, and an identifier of the target graphical element. The first drawing event identifier represents the first drawing operation, the first live streaming timestamp represents play time of a live video played by the first terminal device when the user performs the first drawing operation, and the identifier of the target graphical element represents that the first drawing operation corresponds to the target graphical element. The first target graphical element drawing instruction includes the first live streaming timestamp and the identifier of the target graphical element.

In a possible design, the comment server may generate the first target graphical element drawing instruction by using the following steps.

The comment server determines a type of the target graphical element based on the identifier of the target graphical element included in the first drawing event information. The comment server generates the first target graphical element drawing instruction based on the type of the target graphical element and the first drawing event identifier. For example, the type of the target graphical element may include a circle, a quadrilateral, a straight line, and the like.

According to this design, the comment server may generate the first target graphical element drawing instruction based on the type of the target graphical element.

In a possible design, the first drawing event information further includes a location that a cursor or a touch point has in a specified display area of a display screen of the first terminal device when the user performs the first drawing operation, where the specified display area is a location for displaying the live video. The comment server may generate the first target graphical element drawing instruction according to the following steps.

The comment server generates vertex coordinates of the target graphical element based on the location that the cursor or the touch point has in the specified display area. The comment server generates the first target graphical element drawing instruction including the vertex coordinates.

According to this design, after receiving the first drawing event information, the comment server may generate the first target graphical element drawing instruction including the vertex coordinates of the target graphical element, so that after receiving the first target graphical element drawing instruction, the second terminal device can determine a drawing location based on the vertex coordinates, to implement synchronization of drawing locations of the target graphical element on the first terminal device and the second terminal device.

In a possible design, before the comment server receives the first drawing event information from the first terminal device, the comment server allocates a drawing identifier to the first terminal device, where the drawing identifier is used to generate the identifier of the target graphical element. The comment server sends the drawing identifier to the first terminal device.

According to this design, the comment server may allocate a unique drawing identifier in an entire network to the first terminal device, so that an identifier that is of a target graphical element and that is generated by the first terminal device based on the drawing identifier is also unique in the entire network, and therefore, an identifier conflict is avoided.

In a possible design, after the comment server generates the first target graphical element drawing instruction, the comment server may further perform life cycle management for a target graphical element object by using the following steps.

The comment server generates first target graphical element drawing information according to the first target graphical element drawing instruction. The comment server updates the first target graphical element drawing information into a target graphical element object. The target graphical element object is configured to maintain target graphical element drawing information of the target graphical element. The comment server performs life cycle management for the target graphical element object. When the comment server determines that a life cycle of the target graphical element object expires, the comment server generates a target graphical element deletion instruction. The comment server deletes the target graphical element object according to the target graphical element deletion instruction, and sends the target graphical element deletion instruction to a second terminal device.

In a possible design, the comment server may further generate a plurality of graphical element drawing instructions based on a stored graphical element object that is in a life cycle. Each graphical element drawing instruction instructs to display one piece of drawing content of a graphical element. The comment server encapsulates the plurality of graphical element drawing instructions into a graphical element drawing instruction package, and sends the graphical element drawing instruction package to a third terminal device that newly accesses the live streaming room.

According to this design, the third terminal device may simultaneously display, based on the received graphical element drawing instruction package, a plurality of graphical elements that are in a life cycle. In this way, display synchronization can be implemented between a newly joined audience-side terminal device and another joined audience-side terminal device.

According to a third aspect, an embodiment of this application provides a live streaming interaction method. The method is executed by a common audience-side terminal device. The terminal device is referred to as a second terminal device for short below. The method includes the following steps.

The second terminal device displays a live video in a specified display area of a display screen. The second terminal device receives a first target graphical element drawing instruction from a comment server. The first target graphical element drawing instruction instructs to display first drawing content of a target graphical element, and the first drawing content is drawing content corresponding to a first drawing operation performed by a user of a first terminal device on the target graphical element. The second terminal device displays the first drawing content of the target graphical element in the specified display area according to the first target graphical element drawing instruction.

According to the method, the second terminal device may display, according to the received first target graphical element drawing instruction, the first drawing content of the target graphical element in the specified display area in which the second terminal device displays the live video. Clearly, according to the method, in a process of broadcasting the live video, the first terminal device may draw a graphical element in a first specified display area in which the first terminal device displays the live video, to implement a drawing function. The second terminal device that plays the live video may synchronously draw a graphical element in a second specified display area in which the second terminal device displays the live video. Because the live streaming interaction method supports synchronous drawing in specified display areas for displaying the live video on a plurality of terminal devices and is not limited to a current simple interaction form, the live streaming interaction method may implement in-depth interaction between a special audience and another common audience in live streaming. Finally, a commentator may comment on content of the live video by drawing, so that a live streaming interaction manner is flexible.

In a possible design, the first target graphical element drawing instruction includes a first live streaming timestamp and an identifier of the target graphical element. The first live streaming timestamp represents play time of a live video played by the first terminal device when the user performs the first drawing operation, and the identifier of the target graphical element represents that the first drawing operation corresponds to the target graphical element.

In a possible design, the second terminal device displays the first drawing content of the target graphical element in the specified display area according to the first target graphical element drawing instruction by using the following steps.

The second terminal device determines a drawing time period based on the live streaming timestamp. The second terminal device generates first target graphical element drawing information according to the first target graphical element drawing instruction when determining that the live video is not played to the drawing time period. The second terminal device displays the first drawing content of the target graphical element in the specified display area based on the first target graphical element drawing information.

In this way, a resource waste caused by still processing and maintaining, by the second terminal device, the first target graphical element drawing instruction when the drawing time period has elapsed since the live video is played can be avoided.

In a possible design, before the second terminal device displays the first drawing content of the target graphical element in the specified display area, the second terminal device draws a screen image based on a target graphical element object in a graphical element display queue and a preset period, and refreshes the screen image on the display screen, to enable second drawing content of the target graphical element to be displayed in the specified display area. The target graphical element object is used to maintain target graphical element drawing information of the target graphical element, the target graphical element object includes second target graphical element drawing information, and the second target graphical element drawing information is used to draw the second drawing content.

According to this design, the second terminal device may draw the screen image based on the target graphical element object in the graphical element display queue and refresh the screen image, to draw, on the display screen, the corresponding drawing content of the target graphical element drawing information that is already included in the target graphical element object.

In a possible design, that the second terminal device displays the first drawing content of the target graphical element in the specified display area based on the first target graphical element drawing information includes the following steps.

The second terminal device updates the generated first target graphical element drawing information into the target graphical element object in the graphical element display queue.

The second terminal device draws the screen image based on the target graphical element object in the graphical element display queue and the preset period, and refreshes the screen image on the display screen, to enable the first drawing content and the second drawing content of the target graphical element to be displayed in the specified display area.

According to this design, each time after generating one piece of target graphical element drawing information, the second terminal device adds each piece of the generated target graphical element drawing information to the target graphical element object. In this way, the second terminal device continuously draws the screen image based on the target graphical element object in the graphical element display queue and the preset period, and refreshes the screen image on the display screen, so that a drawing process of the target graphical element is displayed in the specified display area. In this manner, the second terminal device may display a drawing process of a target image, and may display a dynamic drawing process of the target graphical element from scratch in chronological order.

In a possible design, when the target graphical element object includes the second target graphical element drawing information, the screen image further includes the second drawing content of the target graphical element, where the second target graphical element drawing information is used to draw the second drawing content.

In a possible design, the second terminal device may further perform life cycle management for the target graphical element object in the graphical element display queue. When the second terminal device determines that a life cycle of the target graphical element object expires, the second terminal device generates a first target graphical element deletion instruction. The second terminal device deletes the target graphical element object in an image display queue according to the first target graphical element deletion instruction.

According to this design, the second terminal device may no longer display the target graphical element after the life cycle of the target graphical element object expires, to avoid impact of the target graphical element on watching of the live video by the user.

In a possible design, the second terminal device may further receive a second target graphical element deletion instruction from the comment server, where the second target graphical element deletion instruction instructs to delete the target graphical element object. The second terminal device deletes the target graphical element object according to the second target graphical element deletion instruction.

According to this design, the second terminal device may delete the target graphical element object according to the instruction from the comment server.

In a possible design, the first target graphical element drawing instruction further includes vertex coordinates, and the first target graphical element drawing information includes the vertex coordinates. The second terminal device may draw the screen image based on the target graphical element object in the graphical element display queue by using the following steps.

The second terminal device determines a drawing location in the specified display area based on the vertex coordinates included in the target graphical element drawing information in the target graphical element object. The second terminal device generates the screen image based on the drawing location. The drawing location in the screen image includes the first drawing content of the target graphical element.

According to this design, the second terminal device may determine the drawing location, to display the first drawing content at the drawing location.

In a possible design, the second terminal device displays the live video at a first layer of the specified display area. The second terminal device displays the first drawing content of the target graphical element at a second layer of the specified display area. The second layer is located above the first layer.

The second layer is a transparent layer. In this way, the target graphical element can be drawn on the live video.

According to a fourth aspect, an embodiment of this application provides a terminal device, including units configured to perform the steps according to the first aspect or the third aspect.

According to a fifth aspect, an embodiment of this application provides a comment server, including units configured to perform the steps according to the second aspect.

According to a sixth aspect, an embodiment of this application provides a terminal device, including at least one processing element and at least one storage element. The at least one storage element is configured to store a program and data, and the at least one processing element is configured to perform the method provided in the first aspect or the third aspect of this application.

According to a seventh aspect, an embodiment of this application provides a comment server, including at least one processing element and at least one storage element. The at least one storage element is configured to store a program and data, and the at least one processing element is configured to perform the method provided in the second aspect of this application.

According to an eighth aspect, an embodiment of this application provides a communication system, including a first terminal device, a comment server, and a second terminal device. The first terminal device has a function of performing the method provided in the first aspect of this application. The comment server has a function of performing the method provided in the second aspect of this application. The second terminal device has a function of performing the method provided in the third aspect of this application.

According to a ninth aspect, an embodiment of this application further provides a computer program. When the computer program is run on a computer, the computer is enabled to perform the method provided in any one of the first to third aspects.

According to a tenth aspect, an embodiment of this application further provides a computer-readable storage medium. The computer-readable storage medium stores a computer program. When the computer program is executed by a computer, the computer is enabled to perform the method provided in any one of the first to third aspects.

According to an eleventh aspect, an embodiment of this application further provides a chip. The chip is configured to read a computer program stored in a memory, to perform the method provided in any one of the first to third aspects.

According to a twelfth aspect, an embodiment of this application further provides a chip system. The chip system includes a processor, configured to support a computer apparatus in implementing the method provided in any one of the first to third aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of an architecture of a communication system according to an embodiment of this application;
FIG. 2 is a functional structural diagram of a server in a live streaming service platform according to an embodiment of this application;
FIG. 3 is a flowchart of live streaming and conventional live streaming interaction according to an embodiment of this application;
FIG. 4 is a flowchart of a live streaming interaction method according to an embodiment of this application;
FIG. 5 is a schematic diagram of an architecture of live streaming interaction according to an embodiment of this application;
FIG. 6 is a schematic diagram of an instance of a life cycle management mechanism of a graphical element according to an embodiment of this application;
FIG. 7 is a structural diagram of a communication apparatus according to an embodiment of this application; and
FIG. 8 is a structural diagram of a communication device according to an embodiment of this application.

### DESCRIPTION OF EMBODIMENTS

This application provides a live streaming interaction method and a device, to implement in-depth interaction of a special audience in live streaming. The method and the device are based on a same technical concept. Because a problem-resolving principle of the method is similar to a problem-resolving principle of the device, mutual reference may be made to implementations of the method and the device, and no repeated description is provided.

In the solution provided in embodiments of this application, in a process of broadcasting a live video, a first terminal device may display, in a first specified display area that displays the live video based on a drawing operation performed by a user on a target graphical element, drawing content of the target graphical element, and send drawing event information to a comment server. The comment server may generate a target graphical element drawing instruction based on the received drawing event information, and send the target graphical element drawing instruction to a second terminal device. Finally, the second terminal device may also display, according to the received target graphical element drawing instruction, content of the target graphical element in a second specified display area in which the second terminal device displays the live video. Clearly, according to the method, in a process of broadcasting the live video, the first terminal device may draw a graphical element in a first specified display area in which the first terminal device displays the live video, to implement a drawing function. The second terminal device that plays the live video may synchronously draw a graphical element in a second specified display area in which the second terminal device displays the live video. Because the live streaming interaction method supports synchronous drawing in specified display areas for displaying the live video on a plurality of terminal devices and is not limited to a current simple interaction form, the live streaming interaction method may implement in-depth interaction between a special audience and another common audience in live streaming. Finally, a commentator may comment on content of the live video by drawing, so that a live streaming interaction manner is flexible.

In the following, some terms in this application are described, to help a person skilled in the art have a better understanding.

(1) A terminal device is a device that can provide a live streaming service for a user. The terminal device has a display screen and can display a live video. In addition, the terminal device has data connectivity, and may obtain live video data by using an installed live streaming client/application program or by accessing a server through a browser.

The terminal device may also be referred to as user equipment (user equipment, UE), a client, an electronic device, or the like. Currently, some examples of the terminal device include a mobile phone, a tablet computer, a notebook computer, a computer, a palmtop computer, a mobile internet device (mobile internet device, MID), a wearable device, and the like.

(2) A server is a device that provides a service. The server can respond to a service request of a terminal device and process the service request. Therefore, usually, the server needs to have capabilities of bearing the service and assuring the service. In this application, the server may be a common server, or may be a server in a cloud platform.

It should be noted that a server in a live streaming service platform that provides a live streaming service not only has a live video data processing function, but also has another function such as a comment information processing function. In an implementation, the live streaming service platform may include one server, and the server has the foregoing functions. In another implementation, the live streaming service platform may include a plurality of servers. A server having the live video data processing function may be referred to as a live streaming server, and a server having the comment information processing function may be referred to as a comment server.

In embodiments of this application, the server may be divided into a live streaming module and a comment module based on a logical function of the server in the live streaming service platform. It can be learned from the foregoing two implementations that the live streaming module and the comment module may be located in a same server, or may be located in different servers. This is not limited in this application.

(3) A drawing operation is an operation performed by a user on a terminal device to implement drawing of a target graphical element. For different types of terminal devices, the user may implement the drawing operation in different manners. For example, for a computer, the user may control a cursor by using an input device such as a mouse, to implement the drawing operation. For a terminal device that has a touchscreen, such as a mobile phone or a tablet computer, the user may control a touch point by using a finger or a stylus, to implement the drawing operation.

For example, the drawing operation may be an operation such as a press operation, a drag operation, an uplift operation, a tap operation, a double-tap operation, an undo operation, or a delete operation.

The user can draw a graphical element by performing one drawing operation or a plurality of consecutive drawing operations.

(4) A drawing event is used to represent one drawing operation or a plurality of consecutive drawing operations of a user, and is information that is generated by a terminal device in response to the drawing operation and that can be identified in an operating system, that is, the internal operating system of the terminal device may identify or represent the drawing operation of the user by using the drawing event. The terminal device and a server may identify the drawing event (a type, a sequence number, and the like) by using a drawing event identifier.

(5) A live streaming timestamp indicates a time point of a live video. For example, 90.030 seconds of the live video.

(6) A drawing identifier of a terminal device is allocated by a server to the terminal device for drawing. A drawing identifier allocated by the server to each terminal device is unique. Therefore, the drawing identifier may also be referred to as a global number (global number, GN).

(7) An identifier of a graphical element is generated by a terminal device for the graphical element to be drawn, and is used to uniquely identify drawing of the graphical element by the terminal device. The identifier of the graphical element is generated based on a drawing identifier of the terminal device. Therefore, the identifier of the graphical element may also be referred to as a global number serial number (global number serial number, GNSN).

For example, a GN of the terminal device is 001, and a user of the terminal device chooses to draw a first straight line. In this case, a GNSN of the first straight line generated by the terminal device may be 00 1 05 01, where 05 indicates that a type of a graphical element is a straight line. When the user of the terminal device chooses to draw a second straight line, a GNSN of the second straight line generated by the terminal device may be 00 1 05 02.

For example, a GN of the terminal device is 001, and a user of the terminal device chooses to draw a first circle. In this case, a GNSN of the first circle generated by the terminal device may be 001 06 01, where 06 indicates that a type of a graphical element is a circle.

Embodiments of this application are described in detail below with reference to the accompanying drawings.

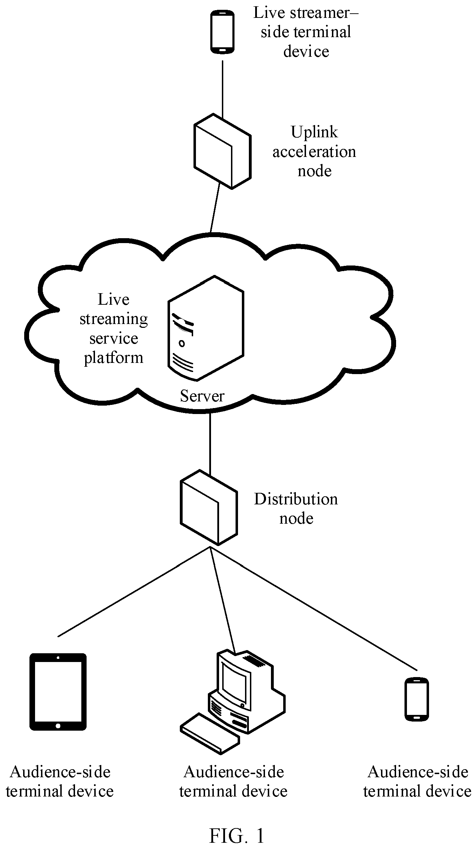

FIG. 1 shows an architecture of a possible communication system to which a live streaming interaction method is applicable according to an embodiment of this application. With reference to FIG. 1, the communication system includes a terminal device and a live streaming service platform. As shown in FIG. 1, the terminal device includes a live streamer-side terminal device and an audience-side terminal device, and the live streaming service platform includes at least one server.

The live streamer-side terminal device is configured to collect a real-time original live video, and upload the collected original live video to the server in the live streaming service platform according to a specified video transmission protocol (for example, a real-time messaging protocol (real-time messaging protocol, RTMP)). Optionally, the live streamer-side terminal device may upload the original live video to the server by using a stream pushing software development kit (software development kit, SDK).

For example, in a video game live streaming scenario, the original live video collected by the live streamer-side terminal device may include a game video currently displayed on a display screen, and include a video of a live streamer that is collected by using a shooting apparatus and that includes the live streamer.

Because an uplink bandwidth used by the live streamer-side terminal device to transmit data to the server is usually small, data transmission efficiency is low. To implement fast stream pushing of the original live video, the communication system further includes an uplink acceleration node. The uplink acceleration node is configured to implement the fast stream pushing of the original live video.

The server in the live streaming service platform is configured to receive the original live video from the live streamer-side terminal device, and perform transcoding processing on the original live video to generate target live videos with a plurality of different bit rates and formats, to play the target live videos on audience-side terminal devices of different standards. The live streaming server platform sends target live videos of corresponding bit rates and formats to the audience-side terminal devices of different standards.

Optionally, to improve transmission efficiency of the server for the target live video, the communication system further includes a distribution node. The distribution node may be a content delivery network (content delivery network, CDN) node, and is configured to distribute the target live videos with the different bit rates and formats to the audience-side terminal device.

The audience-side terminal device is configured to receive and play the target live video.

In the communication system, an audience may further make a conventional comment by using the audience-side terminal device, including sending a bullet screen and entering comment information in a comment area. The audience-side terminal device may upload, to the server, the conventional comment information sent by the user, and then distribute the conventional comment information to another audience-side terminal device by using the server.

In addition, some special audiences (for example, a commentator) may enable a drawing function of the audience-side terminal device, and then perform a drawing operation on a target graphical element on the audience-side terminal device. The audience-side terminal device may display drawing content of the target graphical element based on the drawing operation of the user, and send drawing event information to the server, so that the server may generate a target graphical element drawing instruction based on the drawing event information. After generating the target graphical element drawing instruction, the server may send the target graphical element drawing instruction to another audience-side terminal device, so that the another audience-side terminal device may synchronously display the drawing content of the target graphical element according to the target graphical element drawing instruction.

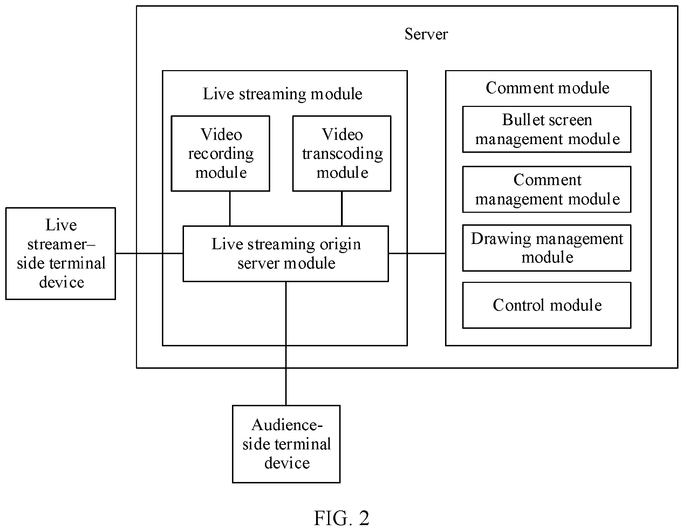

It should be noted that, it can be learned from the foregoing description of the server in the communication system and the foregoing explanation of terms of the server that, in this embodiment of this application, the server in the live streaming service platform has at least a live video data processing function and a comment information processing function. Therefore, with reference to FIG. 2, in subsequent embodiments of this application, the server is divided into a live streaming module and a comment module based on logical function division.

As shown in FIG. 2, the live streaming module includes a video recording module, a video transcoding module, and a live streaming origin server module. The video recording module is configured to record an original live video sent by a live streamer-side terminal device, for ease of subsequent playback. The video transcoding module is configured to perform transcoding processing on the original live video sent by the live streamer-side terminal device, to generate target live videos with a plurality of different bit rates and formats. As a control center of the live streaming module, the live streaming origin server module is configured to: receive the original live video sent by the live streamer-side terminal device, send the original live video to the video recording module and the video transcoding module for processing, and send the target live video processed by the video transcoding module to an audience-side terminal device. In addition, the live streaming origin server module may further receive various types of comment information and drawing event information that are sent by the audience-side terminal device, and send the received information to the comment module for processing.

As shown in FIG. 2, the comment module includes a bullet screen management module, a comment management module, a drawing management module, and a control module. The bullet screen management module is mainly responsible for managing comment information sent by using a bullet screen. The comment management module is mainly responsible for managing comment information entered by an audience in a comment area. The drawing management module is mainly responsible for drawing function management, specifically including: receiving drawing event information sent by an audience-side terminal device that enables a drawing function (where the terminal device is referred to as a commentator-side terminal device for short below), generating a target graphical element drawing instruction based on the drawing event information, and sending the target graphical element drawing instruction to the audience-side terminal device. In addition, the drawing management module is further configured to perform life cycle management for a generated target graphical element object. The control module is mainly responsible for comment permission management and control, for example, enabling or disabling a comment permission, and enabling or disabling a drawing function.

It should be noted that the live streaming module and the comment module may be located in a same server, or may be located in different servers. This is not limited in this application.

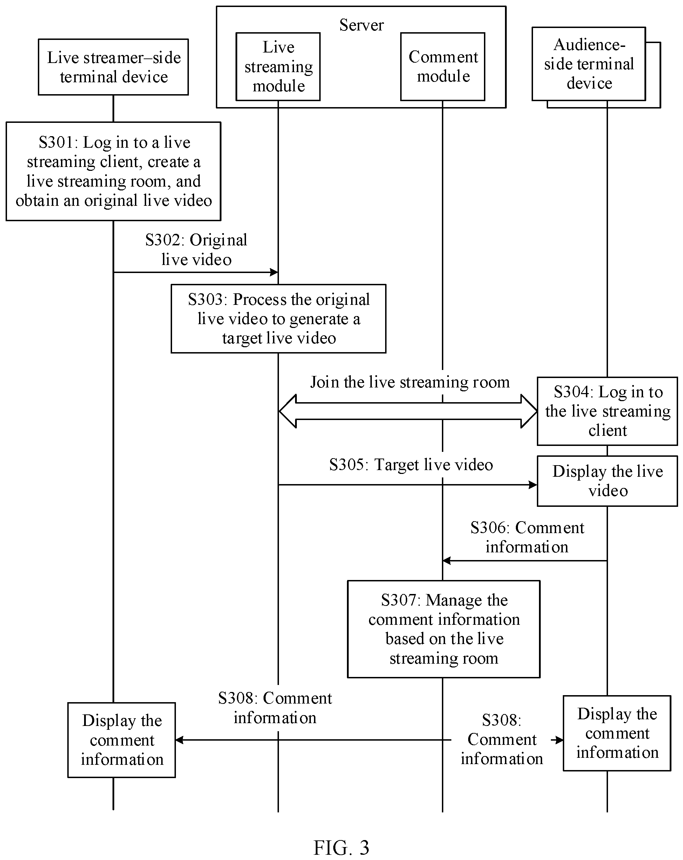

The following describes in detail live streaming and a procedure of a conventional live streaming interaction method by using video game live streaming as an example and referring to FIG. 3.

S301: A live streamer-side terminal device logs in to a live streaming client based on a series of operations of a live steamer by using a user account (which is referred to as a first user account for short) of the live steamer, and creates a live streaming room. Then, the live streamer-side terminal device obtains an original live video. For example, the live streamer-side terminal device may turn on a camera or collect, by using another shooting apparatus, an original video of the live steamer including a scenario in which the current live steamer is located, and collect an original game video of a game interface displayed on a display screen.

S302: The live streamer-side terminal device may push the collected original live video to a server in a live streaming service platform based on a preset video transmission protocol by using a stream pushing SDK.

The live streamer-side terminal device may quickly push the original live video to the server by using an uplink acceleration node shown in FIG. 1.

S303: After receiving the original live video, a live streaming module in the server performs transcoding processing on the original live video to generate a plurality of channels of target live videos, where different channels of target live videos have different bit rates and formats.

In addition, when the original live video is a plurality of channels of original live videos, before performing the transcoding processing on the original live video, the live streaming module may further merge the plurality of channels of original live videos included in the original live video into one channel of original live video. For example, the live streaming module may merge the original video of the live steamer and the original game video, and generate an original live video similar to picture-in-picture (where the video of the live steamer is displayed in a small window in a lower right corner of a game video image).

S304: An audience-side terminal device logs into the live streaming client based on a series of operations of an audience by using a user account (which is referred to as a second user account for short) of the audience, finds the live streaming room in the live streaming client, and applies to join the live streaming room by interacting with the live streaming module. After authenticating the second user account, the live streaming module adds the second user account (that is, the audience-side terminal device that uses the second user account) to the live streaming room.

S305: The live streaming module sends, to the audience-side terminal device, a target live video whose bit rate and format correspond to a standard of the audience-side terminal device. After receiving the target live video, the audience-side terminal device displays the live video on a display screen.

S306: After watching the target live video, the audience may enter comment information in the audience-side terminal device by sending a bullet screen and leaving a message in a comment area. The audience-side terminal device sends the comment information entered by the audience to a comment module in the server.

S307: The comment module manages the comment information based on the live streaming room.

S308: The comment module pushes the comment information to another user account (that is, another audience-side terminal device) and the first user account (that is, the live streamer-side terminal device) in the live streaming room. The another audience-side terminal device and the live streamer-side terminal device display the comment information after receiving the comment information.

When the comment information is entered by sending a bullet screen, the another audience-side terminal device and the live streamer-side terminal device display the comment information in a bullet screen manner. Certainly, the another audience-side terminal device and the live streamer-side terminal device display the comment information when determining that a bullet screen switch is turned on for a local live streaming client. When the comment information is entered by leaving a message in the comment area, the another audience-side terminal device and the live streamer-side terminal device display the comment information in the comment area.

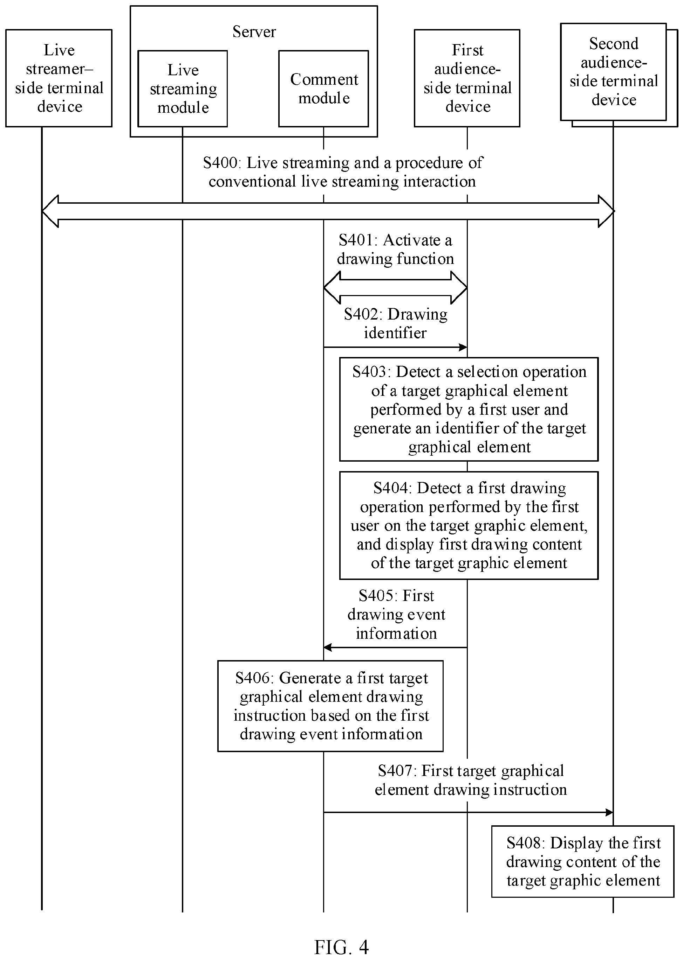

To implement in-depth interaction of a special audience in live streaming, an embodiment of this application provides a live streaming interaction method. The method may be applied to the communication system shown in FIG. 1. With reference to a flowchart of a live streaming interaction method shown in FIG. 4, the following describes steps of the method in detail. It should be noted that the communication system includes a plurality of audience-side terminal devices, and to distinguish between an audience-side terminal device having a commentator permission and an audience-side terminal device of a common audience, in this embodiment of this application, the audience-side terminal device having the commentator permission is referred to as a first audience-side terminal device and is referred to as a first terminal device for short, and the audience-side terminal device of the common audience is referred to as a second audience-side terminal device and is referred to as a second terminal device for short. As shown in FIG. 4, a server includes a live streaming module and a comment module.

S400: The communication system performs live streaming by using live streaming and a conventional live streaming interaction method shown in FIG. 3. In this case, the first terminal device and the second terminal device log in to a live streaming client by using a user account of a corresponding user, and join a live streaming room created by a live streamer, to obtain a live video. The first terminal device and the second terminal device display the live video in a specified display area of each display screen.

S401: The first terminal device activates a drawing function after logging in to the live streaming client by using a user account of a first user (that is, a user who uses the first terminal device).

Optionally, the first terminal device may activate the drawing function in, but not limited to, the following manners.

Manner 1: In a scenario in which the commentator permission (that is, a drawing permission) has been enabled for the user account of the first user, after logging in to the live streaming client by using the user account of the first user, the first terminal device directly enables the drawing function.

Manner 2: In a scenario in which the commentator permission is not enabled for the user account of the first user, the first terminal device may enable the commentator permission (that is, a drawing permission) by using the following procedure.

A1: After logging in to the live streaming client by using the user account of the first user, the first terminal device detects a permission application operation of the first user.

A2: In response to the permission application operation, the first terminal device sends a drawing permission request message to the comment module (for example, the control module in the comment module in FIG. 2) in the server. The drawing permission request message may include the user account of the first user.

A3: The comment module determines the user account of the first user, and performs authentication on the user account of the first user.

A4: After the user account of the first user is authenticated successfully, the comment module sends a drawing permission response message to the first terminal device. The drawing permission response message is used to notify the first terminal device that the user account of the first user has the drawing permission. The first terminal device receives the drawing permission response message sent by the comment module.

A5: The first terminal device activates the drawing function based on the drawing permission response message.

In Manner 2, the first terminal device may apply for the drawing permission in a process of displaying the live video, to activate the drawing function.

Manner 3: In a scenario in which the commentator permission (that is, a drawing permission) has been enabled for the user account of the first user, the first terminal device may enable the commentator permission (that is, the drawing permission) by using the following procedure.

B1: After logging in to the live streaming client by using the user account of the first user, the first terminal device detects a permission enabling operation of the first user.

B2: In response to the permission enabling operation, the first terminal device sends a drawing function activation request message to the comment module (for example, the control module in the comment module) in the server. The drawing function activation request message may include the user account of the first user.

B3: The comment module determines the user account of the first user, and performs authentication on the user account of the first user. For example, the comment module may perform retrieval in a plurality of stored user accounts for which the drawing permission has been enabled. When the plurality of user accounts include the user account of the first user, the authentication succeeds. When the plurality of user accounts do not include the user account of the first user, the authentication fails.

B4: After the user account of the first user is authenticated successfully, the comment module sends a drawing function activation response message to the first terminal device. The drawing function activation response message is used to notify the first terminal device to activate the drawing function.

B5: The first terminal device activates the drawing function based on the drawing function activation response message.

In Manner 3, the first terminal device may apply to activate the drawing function in a process of displaying the live video.

S402: The server allocates a drawing identifier to the first terminal device, and sends the drawing identifier to the first terminal device. The drawing identifier is used to generate an identifier of a graphical element.

It should be noted that the comment module in the server allocates the first terminal device into a unique drawing identifier in an entire network, and the drawing identifier may also be referred to as a GN.

S403: The first terminal device detects a selection operation performed by the first user on a target graphical element, and generates, in response to the selection operation of the target graphical element, an identifier of the target graphical element based on the drawing identifier of the first terminal device.

Because the drawing function has been activated (or the commentator permission or the drawing permission has been enabled) for the user account of the first user by using S401, in a process of watching the live video by using the first terminal device, the first user may select, based on content of the live video and by using the selection operation of the target graphical element, a target graphical element that needs to be drawn. After detecting the selection operation of the target graphical element of the first user, the first terminal device may determine a type of the target graphical element. In this case, the first terminal device may generate an identifier GNSN of the target graphical element based on information such as the drawing identifier GN of the first terminal device and the type of the target graphical element. For a specific example, refer to the foregoing descriptions of the identifier of the graphical element. Details are not described herein again.

S404: The first terminal device detects a first drawing operation performed by the first user on the target graphical element, and displays, in response to the first drawing operation, first drawing content of the target graphical element in the specified display area (which is referred to as a first display area for short below) that displays the live video and that is on the display screen. The first drawing content is drawing content corresponding to the first drawing operation.

It should be noted that, the user may implement complete display of the target graphical element by using one or more drawing operations. In this embodiment of this application, the first drawing operation is used as an example for description.

In an implementation, the first terminal device may display the first drawing content of the target graphical element by using the following method.

The first terminal device determines a location that a cursor or a touch point has in the first display area when the first user performs the first drawing operation.

The first terminal device displays the first drawing content of the target graphical element in the first display area based on the location that the cursor or the touch point has in the first display area.

In this implementation, the first terminal device may display the drawing content of the target graphical element based on a real-time location that a cursor or a touch point has when the user performs the drawing operation.

In another implementation, the method further includes: The first terminal device generates first drawing event information based on the first drawing operation in response to the first drawing operation. The first drawing event information indicates the first drawing operation.

Optionally, the first drawing event information may include a first drawing event identifier, a first live streaming timestamp, and the identifier of the target graphical element. The first drawing event identifier represents the first drawing operation, the first live streaming timestamp represents play time of the live video on the first terminal device when the first user performs the first drawing operation, and the identifier of the target graphical element represents that the first drawing operation corresponds to the target graphical element.

Optionally, the first drawing event information further includes the location that the cursor or the touch point has in the first display area when the first user performs the first drawing operation.

In this implementation, the first terminal device implements drawing of the target graphical element by using a target graphical element object. Optionally, before displaying the first drawing content of the target graphical element in the first display area, the first terminal device may draw, in the following manner, drawing content corresponding to a drawing operation performed by the user on the target graphical element before the first drawing operation.

The first terminal device draws a screen image based on a target graphical element object in a graphical element display queue and a first preset period (that is, a screen refresh cycle of the first terminal device, for example, ls/60 Hz), and refreshes the screen image on the display screen, to enable second drawing content of the target graphical element to be displayed in the specified display area.

The target graphical element object is used to maintain target graphical element drawing information of the target graphical element, the target graphical element object includes second target graphical element drawing information, and the second target graphical element drawing information is used to draw the second drawing content. The second target graphical element drawing information is generated based on a second drawing operation performed by the first user before the first drawing operation. The current screen image includes the second drawing content.

In this manner, the first terminal device may draw the screen image based on the target graphical element object in the graphical element display queue and refresh the screen image, to draw, on the display screen, the drawing content of the target graphical element drawing information that is already included in the target graphical element object.

In this implementation, the first terminal device may display the first drawing content of the target graphical element in the first display area by using the following steps.

C1: The first terminal device generates first target graphical element drawing information according to a first target graphical element drawing instruction, where the first target graphical element drawing information is used to draw the first drawing content.

C2: The first terminal device updates the generated first target graphical element drawing information into the target graphical element object in the graphical element display queue. The first target graphical element drawing information may correspondingly include the first live streaming timestamp and the identifier of the target graphical element.

If the first target graphical element drawing information is the first piece of target graphical element drawing information generated by the first terminal device, the first terminal device first creates the target graphical element object, adds the first target graphical element drawing information to the target graphical element object, and correspondingly adds the target graphical element object to the graphical element display queue. Otherwise, the first terminal device directly adds the generated first target graphical element drawing information to the target graphical element object in a network element display queue (when the target graphical element object already includes the second target graphical element drawing information).

C3: When the target graphical element object already includes the second target graphical element drawing information, the first terminal device continues to draw the screen image based on the target graphical element object in the graphical element display queue and the first preset period, and refresh the screen image on the display screen, to enable the first drawing content and the second drawing content of the target graphical element to be displayed in the specified display area. The current screen image includes the first drawing content and the second drawing content.

It can be known from the foregoing steps that, each time after generating one piece of target graphical element drawing information, the first terminal device adds each piece of the generated target graphical element drawing information to the target graphical element object in the graphical element display queue. In this way, the first terminal device continuously draws the screen image based on the target graphical element object in the graphical element display queue and the first preset period, and refreshes the screen image on the display screen, so that a drawing process of the target graphical element is displayed in the first display area.

In this manner, the first terminal device may display a drawing process of a target image in real time based on the first preset period, and may display a dynamic drawing process of the target graphical element from scratch in chronological order.

For example, the first terminal device respectively generates three pieces of drawing event information based on three drawing operations of the target graphical element.

After generating drawing event information 1 based on a drawing operation 1, the first terminal device generates a target graphical element drawing instruction 1 based on the drawing event information 1, and generates target graphical element drawing information 1 according to the target graphical element drawing instruction 1. The first terminal device creates a target graphical element object, adds the target graphical element drawing information 1 to the target graphical element object, and adds the target graphical element object to a graphical element display queue. In this way, after a screen refresh cycle is reached, the first terminal device may draw a screen image 1 based on the target graphical element drawing information 1 in the graphical element display queue, and display the screen image 1 on the display screen. In this case, only drawing content 1 corresponding to the drawing operation 1 is drawn in the screen image 1.

After generating drawing event information 2 based on a drawing operation 2, the first terminal device generates a target graphical element drawing instruction 2 based on the drawing event information 2, and generates target graphical element drawing information 2 according to the target graphical element drawing instruction 2. The first terminal device adds the target graphical element drawing information 2 to the target graphical element object in the graphical element display queue. In this way, after a next screen refresh cycle is reached, the first terminal device may simultaneously draw a screen image 2 based on the target graphical element drawing information 1 and the target graphical element drawing information 2 in the graphical element display queue, and display the screen image 2 on the display screen. In this case, the screen image 2 includes the drawing content 1 corresponding to the drawing operation 1 and drawing content 2 corresponding to the drawing operation 2.

After generating drawing event information 3 based on a drawing operation 3, the first terminal device generates a target graphical element drawing instruction 3 based on the drawing event information 3, and generates target graphical element drawing information 3 according to the target graphical element drawing instruction 3. The first terminal device adds the target graphical element drawing instruction 3 to the target graphical element object in the graphical element display queue. In this way, after the screen refresh cycle is reached, the first terminal device may simultaneously draw a screen image 3 according to the target graphical element drawing instruction 1, the target graphical element drawing instruction 2, and the target graphical element drawing instruction 3 in the graphical element display queue, and display the screen image 3 on the display screen. In this case, the screen image 3 includes the drawing content 1 corresponding to the drawing operation 1, the drawing content 2 corresponding to the drawing operation 2, and drawing content 3 corresponding to the drawing operation 3.

Subsequently, the first terminal device may continue to draw the screen image based on the first preset period and three pieces of target graphical element drawing information included in the target graphical element object in the graphical element display queue and display the screen image, until the target graphical element object is deleted.

It should be further noted that a drawing process of some graphical elements is instant, for example, a point. In this case, the first terminal device may generate drawing event information based on a drawing operation of the target graphical element, generate a target graphical element drawing instruction based on the drawing event information, and then generate target graphical element drawing information. Then, the first terminal device may create a target graphical element object based on the target graphical element drawing information, add the target graphical element drawing information to the target graphical element object, and add the target graphical element object to a graphical element display queue. In this way, when the first terminal device draws a screen image based on the target graphical element object in the graphical element display queue, the screen image may include the point.

Clearly, as the target graphical element drawing information in the target graphical element object in the graphical element display queue increases, the first terminal device may display, by refreshing the screen image for a plurality of times, a dynamic drawing process of the target graphical element from scratch in chronological order. In addition, after the last piece of target graphical element drawing information is added to the target graphical element object, the first terminal device may display the complete target graphical element until the target graphical element object in the graphical element display queue is deleted.

In addition, it should be further noted that, the first terminal device may perform life cycle management for the displayed complete target graphical element, that is, after the complete target graphical element for first specified duration is displayed, the complete target graphical element is not displayed. To implement the foregoing function, the first terminal device may perform the following steps.

D 1: The first terminal device may perform life cycle management for the target graphical element object in the graphical element display queue.

For example, the first terminal device may enable a life cycle of the target graphical element object at a moment when the last piece of target graphical element drawing information is added to the target graphical element object. Alternatively, the first terminal device may enable a life cycle of the target graphical element object at a moment when the first piece of target graphical element drawing information is added to the target graphical element object.

D2: When the first terminal device determines that the life cycle of the target graphical element object expires, the first terminal device generates a target graphical element deletion instruction.

D3: The first terminal device deletes the target graphical element object in the graphical element display queue according to the target graphical element deletion instruction.

In another implementation, the first terminal device may display the drawing process of the target graphical element and the live video in the first display area by layer in the following manner.

The first terminal device displays the live video at a first layer of the first display area.

The first terminal device displays the first drawing content of the target graphical element at a second layer of the first display area. The second layer is located above the first layer, and the second layer is a transparent layer.

In this way, the first terminal device can implement a drawing effect on the live video.

It should be noted that a specific form of each drawing operation is not limited in this application. The first drawing operation may include at least one or a combination of the following: a press operation, a drag operation, an uplift operation, a tap operation, a double-tap operation, an undo operation, and a delete operation. In this manner, the first user may flexibly draw the target graphical element by using a plurality of operations.

When the first drawing operation is the undo operation, the first drawing content is deleting drawing content corresponding to the second drawing operation. The second drawing operation is n drawing operations performed by the user on the target graphical element before the first drawing operation, and n is an integer greater than or equal to 1.

When the first drawing operation is the delete operation, the first drawing content is deleting drawing content corresponding to a third drawing operation. The third drawing operation is all drawing operations performed by the user on the target graphical element before the first drawing operation.

In addition, when the first drawing operation is the undo operation or the delete operation, there may be one or more target graphical elements. This is not limited in this application.

It should be noted that, to ensure transmission security of a plurality of pieces of drawing event information for a same target graphical element, after generating each piece of drawing event information, the first terminal device may encode the drawing event information, for example, add a sequence number to the first drawing event information. In addition, the first drawing event information may further include information such as an identifier of the live streaming room and the user account of the first user.

S405: After generating the first drawing event information, the first terminal device sends the first drawing event information to the server. The server receives the first drawing event information from the first terminal device.

Optionally, the first terminal device may send the first drawing event information to the comment module in the server through forwarding by the live streaming module in the server. The first drawing event information may carry the identifier of the live streaming room. In addition, after receiving the first drawing event information, the live streaming module may determine the identifier (or a live streaming room number) of the live streaming room, and add the identifier of the live streaming room to the first drawing event information. For example, the live streaming module may determine the identifier of the live streaming room in, but not limited to, the following manners.

Manner 1: When the first drawing event information further includes the user account of the first user, the live streaming module may determine the identifier of the live streaming room based on the user account of the first user.

Manner 2: The live streaming module may determine the identifier of the live streaming room based on an identifier of the first terminal device or connection information of the first terminal device (for example, a session identifier of the first terminal device).

S406: The server generates the first target graphical element drawing instruction based on the first drawing event information. The first target graphical element drawing instruction instructs to display the first drawing content of the target graphical element. The first drawing content is the drawing content corresponding to the first drawing operation performed by the first user on the target graphical element.

It can be learned from the foregoing descriptions that, in an implementation, the first drawing event information may include the first drawing event identifier, the first live streaming timestamp, and the identifier of the target graphical element.

In this implementation, the first target graphical element drawing instruction includes the first live streaming timestamp and the identifier of the target graphical element.

In addition, the comment module in the server may manage the generated first target graphical element drawing instruction based on the live streaming room. It is similar to the live streaming module that, the comment module may also determine the identifier of the live streaming room in the foregoing two manners. In addition, the first target graphical element drawing instruction may also carry the identifier of the live streaming room.

In a design, the comment module may generate the first target graphical element drawing instruction by using the following steps.

The comment module determines the type of the target graphical element based on the identifier of the target graphical element included in the first drawing event information.

The comment module generates the first target graphical element drawing instruction based on the type of the target graphical element and the first drawing event identifier.

According to this design, the comment module may generate the first target graphical element drawing instruction based on the type of the target graphical element.

In another design, the first drawing event information may further include the location that the cursor or the touch point has in the first display area when the first user performs the first drawing operation. In this case, the comment module may generate the first target graphical element drawing instruction based on the following steps.

The comment module generates vertex coordinates of the target graphical element based on the location that the cursor or the touch point has in the first display area.

The comment module generates the first target graphical element drawing instruction including the vertex coordinates.

According to this design, when the first target graphical element drawing instruction is sent to the second terminal device, the second terminal device may display the first drawing content of the target graphical element based on the vertex coordinates in the first target graphical element drawing instruction.

It should be further noted that, after generating the first target graphical element drawing instruction, the comment module may further maintain a locally stored target graphical element object in the following manner.

The comment server generates the first target graphical element drawing information according to the first target graphical element drawing instruction.

The comment server updates the first target graphical element drawing information into the target graphical element object. The target graphical element object is configured to maintain all target graphical element drawing information of the target graphical element.

The comment server performs the life cycle management for the target graphical element object.

When the comment server determines that the life cycle of the target graphical element object expires, the comment server generates the target graphical element deletion instruction.

The comment server deletes the target graphical element object according to the target graphical element deletion instruction, and sends the target graphical element deletion instruction to the second terminal device, so that the second terminal device also synchronously deletes all target graphical element drawing instructions including the identifier of the target graphical element.

It is similar to the first terminal device that, the comment module may enable the life cycle of the target graphical element at a moment of generating the last piece of target graphical element drawing information; or the first terminal device may enable the life cycle of the target graphical element at a moment of generating the first piece of target graphical element drawing information.

In addition, the comment module may further generate a plurality of graphical element drawing instructions based on a stored graphical element object that is in a life cycle. Each graphical element drawing instruction instructs to display one piece of drawing content of a graphical element. The comment server encapsulates the plurality of graphical element drawing instructions into a graphical element drawing instruction package, and sends the graphical element drawing instruction package to a third terminal device that newly accesses the live streaming room.

The third terminal device is an audience-side terminal device that newly joins the live streaming room. In this manner, the third terminal device may simultaneously display, based on the received graphical element drawing instruction package, a plurality of graphical elements that are in a life cycle. In this way, display synchronization can be implemented between a newly joined audience-side terminal device and another joined audience-side terminal device.

It should be noted that, when the comment module forwards the graphical element drawing instruction package to the third terminal device through the live streaming module, the graphical element drawing instruction package may further carry a dedicated indication. The dedicated indication indicates to send to the audience-side terminal device that newly joins the live streaming room. In this way, when the graphical element drawing instruction package is forwarded through the live streaming module, the live streaming module may determine a transmission object of the graphical element drawing instruction package based on the dedicated indication.

S407: The server sends the first target graphical element drawing instruction to the second terminal device. The second terminal device receives the first target graphical element drawing instruction from the server.

The second terminal device is a joined audience-side terminal device.

Optionally, the comment module may send the first target graphical element drawing instruction to the second terminal device through forwarding by the live streaming module.

S408: The second terminal device displays, according to the first target graphical element drawing instruction, the first drawing content of the target graphical element in the specified display area (which is referred to as a second display area for short below) that displays the live video and that is on the display screen.

In an implementation, it can be learned from the foregoing descriptions that the first target graphical element drawing instruction instructs to display the first drawing content of the target graphical element. The first drawing content is the drawing content corresponding to the first drawing operation performed by the first user of the first terminal device on the target graphical element. The first target graphical element drawing instruction may include the first live streaming timestamp and the identifier of the target graphical element.

In this implementation, the second terminal device may display the drawing process of the target graphical element in the following manner.

E1: The second terminal device may determine a drawing time period based on the first live streaming timestamp. For example, the drawing time period may start from the first live streaming timestamp and last for second specified duration, or may start from a point (before or after the first live streaming timestamp) that is determined based on the first live streaming timestamp and last for second specified duration.

E2: The second terminal device generates the first target graphical element drawing information according to the first target graphical element drawing instruction when determining that the live video is not played to the drawing time period. The first target graphical element drawing information is used to draw the first drawing content.

When the second terminal determines that the drawing time period has elapsed since the live video is played, the second terminal device may directly delete the first target graphical element drawing instruction without processing the first target graphical element drawing instruction.

Then, the second terminal device displays the first drawing content of the target graphical element in the second display area based on the first target graphical element drawing information and a target graphical element object by using the following steps.

E3: The second terminal device updates the generated first target graphical element drawing information to the target graphical element object, and adds the target graphical element object to a graphical element display queue. Alternatively, the second terminal device updates the generated first target graphical element drawing information to the target graphical element object in a graphical element display queue. The target graphical element object is configured to maintain all target graphical element drawing information of the target graphical element.

If the first target graphical element drawing information is the first piece of target graphical element drawing information generated by the second terminal device, the second terminal device creates the target graphical element object, and adds the first target graphical element drawing information to the target graphical element object. Otherwise, the second terminal device directly adds the generated first target graphical element drawing information to the target graphical element object.

In addition, the second terminal device may determine a graphical element display time period based on target graphical element drawing information that is in the target graphical element object and that is of the earliest live streaming timestamp, and add the target graphical element object to the graphical element display queue when the live video is played to the graphical element display time period.

E3: The second terminal device draws a screen image based on the target graphical element object in the graphical element display queue and a second preset period (that is, a screen refresh cycle of the second terminal device, for example, ls/60 Hz), and refreshes the screen image on the display screen, so that the first drawing content of the target graphical element is displayed in the specified display area. The screen image includes the first drawing content.

It is similar to the first terminal device that, before the second terminal device displays the first drawing content of the target graphical element in the specified display area, if the graphical element display queue of the second terminal device already includes the target graphical element object, the second terminal device may draw, on the display screen by using the following steps, the corresponding drawing content of the target graphical element drawing information that is already included in the target graphical element object.

The second terminal device draws the screen image based on the target graphical element object in the graphical element display queue and the second preset period, and refreshes the screen image on the display screen, to enable the second drawing content of the target graphical element to be displayed in the specified display area.

In this case, the target graphical element object includes the second target graphical element drawing information, and the second target graphical element drawing information is used to draw the second drawing content.

According to this process, the second terminal device may display a dynamic drawing process of the target graphical element by refreshing the screen image for a plurality of times. In addition, after the last piece of target graphical element drawing information is added to the target graphical element object in the graphical element display queue, the second terminal device may display the complete target graphical element until the target graphical element drawing instruction in the graphical element display queue is deleted.

When the target graphical element object is not added to the graphical element display queue, in a process in which the live video is played to the graphical element display time period, the second terminal device displays the first drawing content of the target graphical element in the specified display area based on the target graphical element object in the graphical element display queue.

In addition, the second terminal device may further implement life cycle management for the target graphical element by using the following steps.

F1: The second terminal device performs life cycle management for the target graphical element object in the graphical element display queue.

F2: When the second terminal device determines that a life cycle of the target graphical element object expires, the second terminal device generates a first target graphical element deletion instruction.

F3: The second terminal device deletes the target graphical element object in an image display queue according to the first target graphical element deletion instruction.

In an implementation, the second terminal device may further delete, according to second target graphical element deletion instruction received from the comment module, all target graphical element drawing instructions that are in a drawing instruction queue and that include the identifier of the target graphical element.

In another implementation, when the first target graphical element drawing instruction further includes the vertex coordinates, the first target graphical element drawing information also includes the vertex coordinates. That the second terminal device draws the screen image based on the target graphical element object in the graphical element display queue includes the following steps.

The second terminal device determines a drawing location in the specified display area based on the vertex coordinates included in the target graphical element drawing information in the target graphical element object.

The second terminal device generates the screen image based on the drawing location. The drawing location in the screen image includes the first drawing content of the target graphical element.

In still another implementation, the second terminal device may display the first drawing content of the target graphical element and the live video in the second display area by layer in the following manner.

The second terminal device displays the live video at a first layer of the second display area.

The second terminal device displays the first drawing content of the target graphical element at a second layer of the second display area. The second layer is located above the first layer, and the second layer is a transparent layer.

According to this implementation, the second terminal device can implement a drawing effect on the live video.

This embodiment of this application provides the live streaming interaction method. In the method, in a process of broadcasting the live video, the first terminal device may display, in the first specified display area that displays the live video based on a drawing operation performed by a user on a target graphical element, drawing content of the target graphical element, and send drawing event information to the comment module in the server. The comment module may generate a target graphical element drawing instruction based on the received drawing event information, and send the target graphical element drawing instruction to the second terminal device. Finally, the second terminal device may also display, according to the received target graphical element drawing instruction, the drawing content of the target graphical element in the second specified display area in which the second terminal device displays the live video. Clearly, according to the method, in a process of broadcasting the live video, the first terminal device may draw a graphical element in a first specified display area in which the first terminal device displays the live video, to implement a drawing function. The second terminal device that plays the live video may synchronously draw a graphical element in a second specified display area in which the second terminal device displays the live video. Because the live streaming interaction method supports synchronous drawing in specified display areas for displaying the live video on a plurality of terminal devices and is not limited to a current simple interaction form, the live streaming interaction method may implement in-depth interaction between a special audience and another common audience in the live streaming. Finally, a commentator may comment on content of the live video by drawing, so that interest and participation of live streaming interaction can be increased, attraction of the live streaming can be improved, and a live streaming interaction manner is flexible.

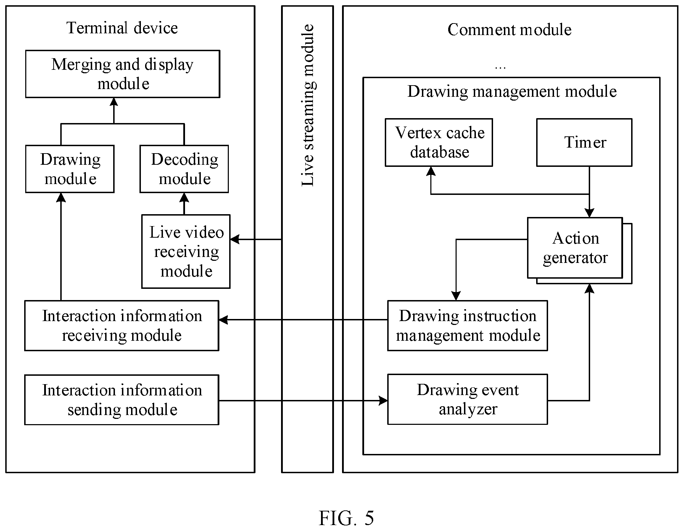

Based on the embodiment shown in FIG. 4, this application further provides an architecture of live streaming interaction. The architecture uses a terminal device and a drawing management module of a comment module in a server as keys to describe functions of each device in a live streaming interaction process. The following describes in detail functions of each functional module in the terminal device and the server with reference to an architectural diagram shown in FIG. 5.

As shown in FIG. 5, the drawing management module includes five modules: a drawing event analyzer, a drawing instruction management module, an action generator, a timer, and a vertex cache database. The terminal device includes a merging and display module, a drawing module, a decoding module, a live video receiving module, an interaction information receiving module, and an interaction information sending module. The following describes functions of the modules with reference to an interaction process between the modules.

The interaction information sending module is responsible for receiving comment information submitted by a user, sending the comment information to a comment management module in the comment module in the server, generating drawing event information based on a drawing operation performed by the user in a specified display area for displaying a live video, and sending the generated drawing event information to the drawing management module. The drawing event information may carry information such as an identifier GNSN of a target graphical element, a live streaming timestamp, and a drawing event identifier used to represent the drawing operation.

In this embodiment of this application, the terminal device and the comment module need to perform communication and interaction by using forwarding of a live streaming module.

The drawing event analyzer receives the drawing event information sent by the interaction information sending module in the terminal device, performs grouping based on a live streaming room, determines a type of the target graphical element, and then submits the drawing event information to an action generator corresponding to the type of the target graphical element for processing.

There may be a plurality of action generators. Each action generator corresponds to a type of the target graphical element. In other words, each type of the graphical element has a dedicated action generator, for example, a line segment action generator and a circular action generator. The action generator may generate a corresponding graphical element drawing instruction based on the received drawing event information. The graphical element drawing instruction may generate graphical element drawing information, to draw drawing content corresponding to the drawing operation of the user. This includes: creating a target graphical element, adding a vertex of the target graphical element (to be an existing graphical element), canceling drawn content in the target graphical element, deleting the target graphical element, and the like.

The vertex cache database maintains all created graphical element objects. A target graphical element object is configured to maintain all graphical element drawing information of the target graphical element. Each piece of graphical element drawing information is used to draw a part or all of drawing content in the graphical element. Optionally, each piece of graphical element drawing information may include information such as the identifier of the graphical element, the live streaming timestamp, vertex coordinates corresponding to the graphical element, color, the type of the graphical element, and an identifier of a live streaming room.

The timer performs life cycle management for each graphical element object in the vertex cache database. The timer periodically checks whether a life cycle of each graphical element object in the vertex cache database expires. If a life cycle of a graphical element object expires, the timer submits the graphical element object to the action generator to generate a graphical element deletion instruction for deleting the graphical element object, and deletes the graphical element object from the vertex cache database according to the graphical element deletion instruction.

The drawing instruction management module is configured to encode and package a target graphical element drawing instruction generated by the action generator. In addition, the drawing instruction management module may further encapsulate graphical element drawing instructions of all graphical element objects whose life cycles do not expire into a graphical element drawing instruction package. The graphical element drawing instruction package further includes a dedicated indication that indicates that a transmission object of the graphical element drawing instruction package is an audience-side terminal device that newly joins the live streaming room.

The interaction information receiving module is configured to receive interaction information delivered by the comment module through the live streaming module and distinguish conventional comment information and a graphical element drawing instruction in the interaction information. If the graphical element drawing instruction is received, the graphical element drawing instruction is sent to a cache queue of the drawing module for caching.

The drawing module is configured to control drawing of a graphical element. The drawing module generates a transparent layer in the specified display area for displaying the live video, and then draws on the layer according to the graphical element drawing instruction. The drawing module may maintain two queues: the graphical element cache queue and a graphical element display queue. After receiving a graphical element drawing instruction, the drawing module generates graphical element drawing information, determines a queue in which a graphical element object is located based on an identifier of a graphical element included in the graphical element drawing information, and updates the graphical element drawing information to the graphical element object in the queue. If determining that a graphical element object does not exist, the drawing module creates the graphical element object, adds the graphical element drawing information to the graphical element object, and determines, based on a live streaming timestamp in the graphical element drawing information, a queue in which the graphical element object is to be stored. For example, when determining that the live video is played to a drawing time period corresponding to the live streaming timestamp, the drawing module stores the graphical element object in the graphical element display queue. When determining that the live video is not played to a drawing time period corresponding to the live streaming timestamp, the drawing module stores the graphical element object in the graphical element cache queue.

When receiving the graphical element drawing instruction, the drawing module determines the drawing time period based on the live streaming timestamp in the graphical element drawing instruction. If the drawing module determines that the live video played passed the drawing time period, the drawing module directly deletes the graphical element drawing instruction; otherwise, according to the foregoing steps, the drawing module generates the graphical element drawing information and updates the graphical element drawing information into the graphical element object.

In addition, the drawing module may determine a graphical element display time period based on target graphical element drawing information that is in the target graphical element object in the graphical element cache queue and that is of the earliest live streaming timestamp. When the drawing module determines that the live video is played to the graphical element display time period, the drawing module deletes the target graphical element object from the graphical element cache queue, and then adds the target graphical element object to the graphical element display queue.

The drawing module continuously draws a screen image based on the object in the graphical element display queue and a preset period and refreshes the screen image on a display screen. In addition, the drawing module may also perform life cycle management for each graphical element object in the graphical element display queue. When determining that a life cycle of any graphical element object expires, the drawing module generates a graphical element deletion instruction and deletes the graphical element object in the graphical element display queue according to the graphical element deletion instruction.

The merging and display module is configured to merge a first layer that displays the live video and a second layer that is generated by the drawing module and that is used to display a drawing process of a graphical element, and display a merged layer on the display screen.

The live video receiving module is configured to receive a live video data stream sent by the live streaming module.

The decoding module is configured to decode the live video data stream received by the live video receiving module to obtain a to-be-played live video.

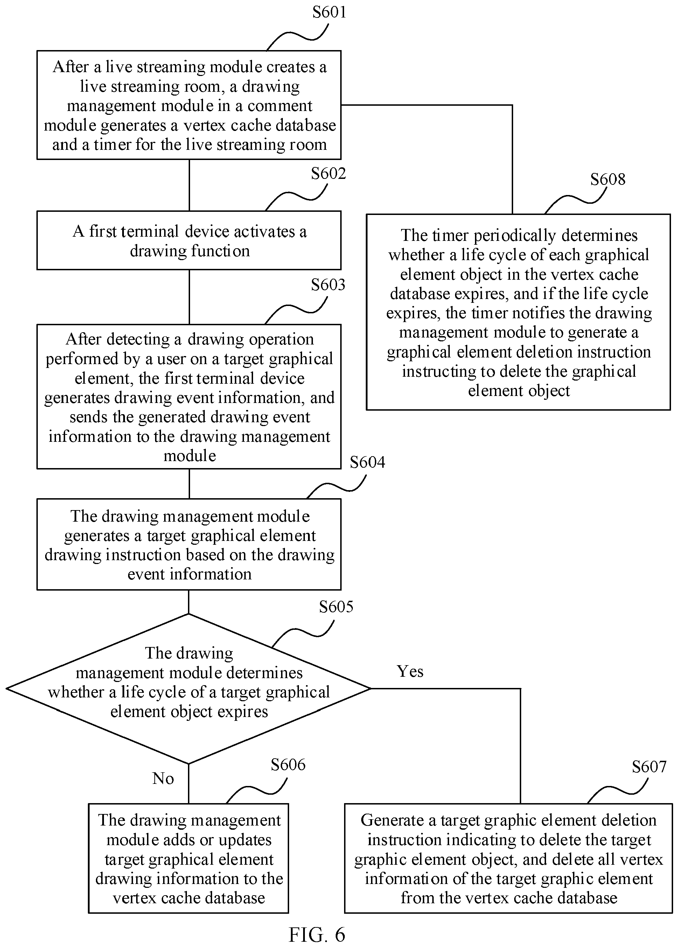

Based on the foregoing embodiments, this application further provides an instance of a life cycle management mechanism for a graphical element. The following describes the life cycle management mechanism with reference to a life cycle management process of the graphical element shown in FIG. 6.

S601: After a live streaming module creates a live streaming room, a drawing management module in a comment module in a server generates a vertex cache database and a timer for the live streaming room.

S602: A first terminal device in audience-side terminal devices activates a drawing function.

For a specific procedure of activating the drawing function by the first terminal device, refer to descriptions in the embodiment shown in FIG. 4. Details are not described herein again.

S603: After detecting a drawing operation performed by a user on a target graphical element, the first terminal device generates corresponding drawing event information, and sends the generated drawing event information to the drawing management module.

S604: The drawing management module generates a target graphical element drawing instruction based on the drawing event information.

S605: The drawing management module determines whether a life cycle of a target graphical element object in the vertex cache database expires, and performs S607 if the life cycle expires, or performs S606 if the life cycle does not expire.

S606: The drawing management module generates target graphical element drawing information of the target graphical element according to the target graphical element drawing instruction, and updates or adds the target graphical element drawing information to the target graphical element object in the vertex cache database.

S607: The drawing management module generates a target graphical element deletion instruction instructing to delete the target graphical element object, sends the target graphical element deletion instruction to a second terminal device (that is, another audience-side terminal device), and deletes the target graphical element object from the vertex cache database.

S608: The timer periodically determines whether a life cycle of each graphical element object in the vertex cache database expires, and if the life cycle expires, the timer notifies the drawing management module to generate a graphical element deletion instruction instructing to delete the graphical element object. The drawing management module generates the graphical element deletion instruction, deletes the graphical element object from the vertex cache database according to the graphical element deletion instruction, and sends the graphical element deletion instruction to the second terminal device.

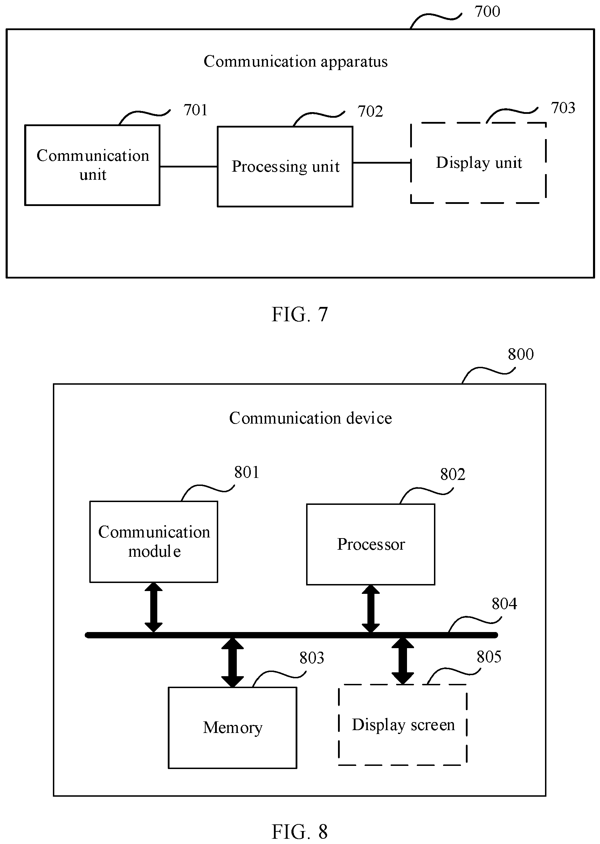

Based on a same technical concept, an embodiment of this application further provides a communication apparatus. A structure of the apparatus is that shown in FIG. 7, and the apparatus includes a communication unit 701 and a processing unit 702. A communication apparatus 700 may be applied to a live streaming-side terminal device (which is referred to as a first terminal device for short below), a server (which is also referred to as a comment server), or an audience-side terminal device (which is referred to as a second terminal device for short below) in the communication system shown in FIG. 1, and may implement the live streaming interaction method provided in the foregoing embodiments and examples.

Optionally, when the communication apparatus 700 is applied to the first terminal device or the second terminal device, the communication apparatus 700 further includes a display unit 703.

The communication unit 701 is configured to receive and send data. The display unit 703 is configured to display an interface, and the display unit 703 may alternatively be a display screen or a display panel.

When the communication apparatus 700 is applied to the server, the communication unit 701 may also be referred to as a physical interface, a communication module, a communication interface, or an input/output interface. The communication apparatus 700 may be connected to a network cable or a cable by using the communication unit 701, to establish a physical connection to another device.

When the communication apparatus 700 is applied to a terminal device (the first terminal device or the second terminal device), the communication unit 701 may also be referred to as a transceiver, and may be implemented by using a mobile communication module and/or a wireless communication module.

The mobile communication module may provide a solution that is applied to the terminal device and that includes wireless communication such as 2G, 3G, 4G, and 5G. The mobile communication module may include at least one antenna, at least one filter, a switch, a power amplifier, a low noise amplifier (low noise amplifier, LNA), and the like. The terminal device may access a mobile communication network by using the mobile communication module, and then access a forwarding device in a computing network by using the mobile communication network.

The wireless communication module may provide a solution that includes wireless communication such as a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), and near field communication (near field communication, NFC) and that is applied to the terminal device. The wireless communication module 160 may include at least one antenna and one or more components of at least one communication processor module. The terminal device may access a wireless communication network by using the wireless communication module, and then access a forwarding device in a computing network by using the wireless communication network.

The following describes specific functions of each unit and module when the communication apparatus 700 is applied to the first terminal device.

The processing unit 702 is configured to: display a live video in a specified display area of the display unit 703, detect a first drawing operation performed by a user on a target graphical element in the specified display area, and display first drawing content of the target graphical element in the specified display area in response to the first drawing operation. The first drawing content is drawing content corresponding to the first drawing operation.

The communication unit 701 is configured to send first drawing event information of the target graphical element to the server, where the first drawing event information indicates the first drawing operation.

In an implementation, the first drawing event information includes a first drawing event identifier, a first live streaming timestamp, and an identifier of the target graphical element.

The first drawing event identifier represents the first drawing operation, the first live streaming timestamp represents play time of the live video when the user performs the first drawing operation, and the identifier of the target graphical element represents that the first drawing operation corresponds to the target graphical element.

In an implementation, the first drawing event information further includes a location that a cursor or a touch point has in the specified display area when the user performs the first drawing operation.

In an implementation, the processing unit 702 is further configured to:
after a drawing function is activated, receive, by using the communication unit 701, a drawing identifier allocated by the server to the first terminal device; and
generate the identifier of the target graphical element based on the drawing identifier.

In an implementation, when displaying the first drawing content of the target graphical element in the specified display area, the processing unit 702 is specifically configured to:
determine the location that the cursor or the touch point has in the specified display area when the user performs the first drawing operation; and
display, by the first terminal device, the first drawing content of the target graphical element in the specified display area based on the location that the cursor or the touch point has in the specified display area.

In an implementation, when displaying the live video in the specified display area, the processing unit 702 is specifically configured to:
display the live video at a first layer of the specified display area.

When displaying the first drawing content of the target graphical element in the specified display area, the processing unit 702 is specifically configured to:
display the first drawing content of the target graphical element at a second layer of the specified display area, where the second layer is located above the first layer.

In an implementation, when displaying the first drawing content of the target graphical element in the specified display area, the processing unit 702 is specifically configured to:
generate a first target graphical element drawing instruction based on the first drawing event information; and
display the first drawing content of the target graphical element in the specified display area according to the first target graphical element drawing instruction.

In an implementation, the processing unit 702 is further configured to:
before displaying the first drawing content of the target graphical element in the specified display area, draw a screen image based on a target graphical element object in a graphical element display queue and a preset period, and refresh the screen image on the display unit 703, to enable second drawing content of the target graphical element to be displayed in the specified display area.

The target graphical element object is used to maintain target graphical element drawing information of the target graphical element, the target graphical element object includes second target graphical element drawing information, and the second target graphical element drawing information is used to draw the second drawing content.

In an implementation, when displaying the first drawing content of the target graphical element in the specified display area according to the first target graphical element drawing instruction, the processing unit 702 is specifically configured to:
generate first target graphical element drawing information according to the first target graphical element drawing instruction, where the first target graphical element drawing information is used to draw the first drawing content;
update the generated first target graphical element drawing information into the target graphical element object in the graphical element display queue; and
draw the screen image based on the target graphical element object in the graphical element display queue and the preset period, and refresh the screen image on the display unit 703, to enable the first drawing content and the second drawing content of the target graphical element to be displayed in the specified display area.

In an implementation, when the target graphical element object includes the second target graphical element drawing information, the screen image further includes the second drawing content of the target graphical element, where the second target graphical element drawing information is used to draw the second drawing content.

In an implementation, the processing unit 702 is further configured to:
perform life cycle management for the target graphical element object in the graphical element display queue;
when it is determined that a life cycle of the target graphical element object expires, generate a target graphical element deletion instruction; and
delete the target graphical element object in the graphical element display queue according to the target graphical element deletion instruction.

In an implementation, the first drawing operation includes at least one or a combination of the following: a press operation, a drag operation, an uplift operation, a tap operation, a double-tap operation, an undo operation, and a delete operation.

In an implementation, when the first drawing operation is the undo operation, the first drawing content is deleting drawing content corresponding to a second drawing operation. The second drawing operation is n drawing operations performed by the user on the target graphical element before the first drawing operation, and n is an integer greater than or equal to 1.

When the first drawing operation is the delete operation, the first drawing content is deleting drawing content corresponding to a third drawing operation. The third drawing operation is all drawing operations performed by the user on the target graphical element before the first drawing operation.

The following describes specific functions of each unit and module when the communication apparatus 700 is applied to the server.

The communication unit 701 is configured to receive first drawing event information from the first terminal device.

The processing unit 702 is configured to generate a first target graphical element drawing instruction based on the first drawing event information. The first target graphical element drawing instruction instructs to display first drawing content of a target graphical element. The first drawing content is drawing content corresponding to a first drawing operation performed by a user of the first terminal device on the target graphical element.

The communication unit 701 is further configured to send the first target graphical element drawing instruction to the second terminal device.

In an implementation, the first drawing event information includes a first drawing event identifier, a first live streaming timestamp, and an identifier of the target graphical element.

The first drawing event identifier represents the first drawing operation, the first live streaming timestamp represents play time of a live video played by the first terminal device when the user performs the first drawing operation, and the identifier of the target graphical element represents that the first drawing operation corresponds to the target graphical element.

The first target graphical element drawing instruction includes the first live streaming timestamp and the identifier of the target graphical element.

In an implementation, when generating the first target graphical element drawing instruction based on the first drawing event information, the processing unit 702 is specifically configured to:
determine a type of the target graphical element based on the identifier of the target graphical element included in the first drawing event information; and
generate the first target graphical element drawing instruction based on the type of the target graphical element and a first drawing event.

In an implementation, the first drawing event information further includes a location that a cursor or a touch point has in a specified display area of the display unit 703 of the first terminal device when the user performs the first drawing operation, where the specified display area is a location for displaying the live video.

When generating the first target graphical element drawing instruction based on the first drawing event information, the processing unit 702 is specifically configured to:
generate vertex coordinates of the target graphical element based on the location that the cursor or the touch point has in the specified display area; and
generate the first target graphical element drawing instruction including the vertex coordinates.

In an implementation, the processing unit 702 is further configured to:
before the communication unit 701 receives the first drawing event information from the first terminal device, allocate a drawing identifier to the first terminal device, where the drawing identifier is used to generate the identifier of the target graphical element.

The communication unit 701 is further configured to send the drawing identifier to the first terminal device.

In an implementation, the processing unit 702 is further configured to:
after the first target graphical element drawing instruction is generated, generate first target graphical element drawing information according to the first target graphical element drawing instruction;
update the first target graphical element drawing information into a target graphical element object, where the target graphical element object is configured to maintain target graphical element drawing information of the target graphical element;
perform life cycle management for the target graphical element object;
when it is determined that a life cycle of the target graphical element object expires, generate a target graphical element deletion instruction; and
delete the target graphical element object according to the target graphical element deletion instruction.

The communication unit 701 is further configured to send the target graphical element deletion instruction to the second terminal device.

The following describes specific functions of each unit and module when the communication apparatus 700 is applied to the second terminal device.

The processing unit 702 is configured to display a live video in a specified display area of the display unit 703.

The communication unit 701 is configured to receive a first target graphical element drawing instruction from the server. The first target graphical element drawing instruction instructs to display first drawing content of a target graphical element, and the first drawing content is drawing content corresponding to a first drawing operation performed by a user of the first terminal device on the target graphical element.

The processing unit 702 is further configured to display the first drawing content of the target graphical element in the specified display area according to the first target graphical element drawing instruction.

In an implementation, the first target graphical element drawing instruction includes a first live streaming timestamp and an identifier of the target graphical element.

The first live streaming timestamp represents play time of a live video played by the first terminal device when the user performs the first drawing operation, and the identifier of the target graphical element represents that the first drawing operation corresponds to the target graphical element.

In an implementation, when displaying the first drawing content of the target graphical element in the specified display area according to the first target graphical element drawing instruction, the processing unit 702 is specifically configured to:
determine a drawing time period based on the live streaming timestamp;
when it is determined that the live video is not played to the drawing time period, generate first target graphical element drawing information according to the first target graphical element drawing instruction; and
display the first drawing content of the target graphical element in the specified display area based on the first target graphical element drawing information.

In an implementation, the processing unit 702 is further configured to:
before displaying the first drawing content of the target graphical element in the specified display area, draw a screen image based on a target graphical element object in a graphical element display queue and a preset period, and refresh the screen image on the display unit 703, to enable second drawing content of the target graphical element to be displayed in the specified display area.

The target graphical element object is used to maintain target graphical element drawing information of the target graphical element, the target graphical element object includes second target graphical element drawing information, and the second target graphical element drawing information is used to draw the second drawing content.

In an implementation, when displaying the first drawing content of the target graphical element in the specified display area based on the first target graphical element drawing information, the processing unit 702 is specifically configured to:
update the generated first target graphical element drawing information into the target graphical element object in the graphical element display queue; and
draw the screen image based on the target graphical element object in the graphical element display queue and the preset period, and refresh the screen image on the display unit 703, to enable the first drawing content and the second drawing content of the target graphical element to be displayed in the specified display area.

In an implementation, the processing unit 702 is further configured to:
perform life cycle management for the target graphical element object in the graphical element display queue;
when it is determined that a life cycle of the target graphical element object expires, generate a first target graphical element deletion instruction; and
delete the target graphical element object in an image display queue according to the first target graphical element deletion instruction.

In an implementation, the communication unit 701 is further configured to receive a second target graphical element deletion instruction from the server, where the second target graphical element deletion instruction instructs to delete the target graphical element object.

The processing unit 702 is further configured to delete the target graphical element object according to the second target graphical element deletion instruction.

In an implementation, the first target graphical element drawing instruction further includes vertex coordinates, and the first target graphical element drawing information includes the vertex coordinates.

When drawing the screen image based on the target graphical element object in the graphical element display queue, the processing unit 702 is specifically configured to:
determine a drawing location in the specified display area based on the vertex coordinates included in the target graphical element drawing information in the target graphical element object; and
generate the screen image based on the drawing location, where the drawing location in the screen image includes the first drawing content of the target graphical element.

In an implementation, when displaying the live video in the specified display area, the processing unit 702 is specifically configured to:
display the live video at a first layer of the specified display area.

When displaying the first drawing content of the target graphical element in the specified display area, the processing unit 702 is specifically configured to:
display the first drawing content of the target graphical element at a second layer of the specified display area, where the second layer is located above the first layer.

It should be noted that in the foregoing embodiments of this application, division into the modules is an example and is merely logical function division, and there may be another division manner during actual implementation. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical conception, an embodiment of this application further provides a communication device. A communication apparatus may be applied to a live streaming-side terminal device (which is referred to as a first terminal device for short below), a server (which is also referred to as a comment server), or an audience-side terminal device (which is referred to as a second terminal device for short below) in the communication system shown in FIG. 1, may implement the live streaming interaction method provided in the foregoing embodiments and examples, and has a function of the communication apparatus 700 shown in FIG. 7. With reference to FIG. 8, a communication device 800 includes a communication module 801, a processor 802, and a memory 803. The communication module 801, the processor 802, and the memory 803 are connected to each other.

Optionally, the communication module 801, the processor 802, and the memory 803 are connected to each other by using a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

Optionally, when the communication device 800 is applied to the first terminal device or the second terminal device, the communication device 800 further includes a display screen 805 that is configured to display an interface.

The communication module 801 is configured to receive and send data, to implement communication interaction with another device. For example, when the communication device 800 is applied to the server, the communication module 801 may be implemented by using a physical interface. For another example, when the communication device 800 is applied to a terminal device, the communication module 801 may alternatively be implemented by using a transceiver.

The processor 802 is configured to enable the first terminal device, the server, or the second terminal device to implement the live streaming interaction method provided in the foregoing embodiments.

In an implementation, when the communication device 800 is applied to the first terminal device, the processor 802 is configured to:
display a live video in a specified display area of the display screen 805;
detect a first drawing operation performed by a user on a target graphical element in the specified display area;
display first drawing content of the target graphical element in the specified display area in response to the first drawing operation, where the first drawing content is drawing content corresponding to the first drawing operation; and
send first drawing event information of the target graphical element to the server through the communication module 801, where the first drawing event information indicates the first drawing operation.

In an implementation, when the communication device 800 is applied to the server, the processor 802 is configured to:
receive first drawing event information from the first terminal device through the communication module 801;
generate a first target graphical element drawing instruction based on the first drawing event information, where the first target graphical element drawing instruction instructs to display first drawing content of a target graphical element, and the first drawing content is drawing content corresponding to a first drawing operation performed by a user of the first terminal device on the target graphical element; and
send the first target graphical element drawing instruction to the second terminal device through the communication module 801.

In an implementation, when the communication device 800 is applied to the second terminal device, the processor 802 is configured to:
display a live video in a specified display area of the display screen 805;
receive a first target graphical element drawing instruction from the server through the communication module 801, where the first target graphical element drawing instruction instructs to display first drawing content of a target graphical element, and the first drawing content is drawing content corresponding to a first drawing operation performed by a user of the first terminal device on the target graphical element; and
display the first drawing content of the target graphical element in the specified display area according to the first target graphical element drawing instruction.

For a specific function of the processor 802, refer to the descriptions in the foregoing live streaming interaction method and the specific function descriptions of the communication apparatus 700 in the embodiment shown in FIG. 7. Details are not described herein again.

The memory 803 is configured to store program instructions, data, and the like. Specifically, the program instructions may include program code, and the program code includes computer operation instructions. The memory 803 may include a random access memory (random access memory, RAM), and may further include a non-volatile memory (non-volatile memory), for example, at least one magnetic disk memory. The processor 802 executes the program instructions stored in the memory 803, and implements the foregoing functions by using the data stored in the memory 803, to implement the live streaming interaction method provided in the foregoing embodiments.

It may be understood that the memory 803 in FIG. 8 of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) that is used as an external cache. By way of example, and not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and methods described in this specification includes but is not limited to these and any memory of another proper type.

Based on the foregoing embodiments, an embodiment of this application further provides a computer program. When the computer program is run on a computer, the computer is enabled to perform the live streaming interaction method according to the foregoing embodiments.

Based on the foregoing embodiments, an embodiment of this application further provides a computer-readable storage medium. The computer-readable storage medium stores a computer program. When the computer program is executed by a computer, the computer is enabled to perform the live streaming interaction method according to the foregoing embodiments.

The storage medium may be any available medium accessible by a computer. The following provides an example but does not impose a limitation: The computer-readable medium may include a RAM, a ROM, an EEPROM, a CD-ROM, or another optical disc storage or magnetic disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, and implement the live streaming interaction method provided in the foregoing embodiments.

According to the foregoing embodiments, an embodiment of this application provides a chip system. The chip system includes a processor, configured to support a computer apparatus in implementing the functions related to the first terminal device, the server, or the second terminal device in the foregoing embodiments. In a possible design, the chip system further includes a memory, and the memory is configured to store a program and data that are necessary for the computer apparatus. The chip system may include a chip, or may include a chip and another discrete component.

Based on the foregoing embodiments, an embodiment of this application further provides a communication system, including a first terminal device, a second terminal device, and a server, to implement the live streaming interaction method provided in the foregoing embodiments.

In conclusion, embodiments of this application provide a live streaming interaction method and a device. In the method, in the process of broadcasting the live video, the first terminal device may display, in the first specified display area that displays the live video based on the drawing operation performed by the user on the target graphical element, the drawing content of the target graphical element, and send the drawing event information to the comment module in the server. The comment module may generate the target graphical element drawing instruction based on the received drawing event information, and send the target graphical element drawing instruction to the second terminal device. Finally, the second terminal device may also display, according to the received target graphical element drawing instruction, the drawing content of the target graphical element in the second specified display area in which the second terminal device displays the live video. Clearly, according to the method, in a process of broadcasting the live video, the first terminal device may draw a graphical element in a first specified display area in which the first terminal device displays the live video, to implement a drawing function. The second terminal device that plays the live video may synchronously draw a graphical element in a second specified display area in which the second terminal device displays the live video. Because the live streaming interaction method supports the synchronous drawing in the specified display areas for displaying the live video on the plurality of terminal devices and is not limited to the current simple interaction form, the live streaming interaction method may implement the in-depth interaction between the special audience and the another common audience in the live streaming. Finally, the commentator may comment on the content of the live video by drawing, so that the interest and the participation of the live streaming interaction can be increased, the attraction of the live streaming can be improved, and the live streaming interaction manner is flexible.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A live streaming interaction method, comprising:
displaying, by a first terminal device, a live video in a specified display area of a display screen;
detecting, by the first terminal device, a first drawing operation performed by a user on a target graphical element in the specified display area;
displaying, by the first terminal device, first drawing content of the target graphical element in the specified display area in response to the first drawing operation, wherein the first drawing content is drawing content corresponding to the first drawing operation; and
sending, by the first terminal device, first drawing event information of the target graphical element to a comment server, wherein the first drawing event information indicates the first drawing operation.

2. The method according to claim 1, wherein the first drawing event information comprises a first drawing event identifier, a first live streaming timestamp, and an identifier of the target graphical element, wherein
the first drawing event identifier represents the first drawing operation, the first live streaming timestamp represents play time of the live video when the user performs the first drawing operation, and the identifier of the target graphical element represents that the first drawing operation corresponds to the target graphical element.

3. The method according to claim 2, wherein the first drawing event information further comprises a location that a cursor or a touch point has in the specified display area when the user performs the first drawing operation.

4. The method according to claim 2 or 3, wherein the method further comprises:
after activating a drawing function, receiving, by the first terminal device, a drawing identifier allocated by the comment server to the first terminal device; and
generating, by the first terminal device, the identifier of the target graphical element based on the drawing identifier.

5. The method according to any one of claims 1 to 4, wherein the displaying, by the first terminal device, first drawing content of the target graphical element in the specified display area comprises:
determining, by the first terminal device, the location that the cursor or the touch point has in the specified display area when the user performs the first drawing operation; and
displaying, by the first terminal device, the first drawing content of the target graphical element in the specified display area based on the location that the cursor or the touch point has in the specified display area.

6. The method according to any one of claims 1 to 5, wherein
displaying, by the first terminal device, the live video in the specified display area comprises:
displaying, by the first terminal device, the live video at a first layer of the specified display area; and
the displaying, by the first terminal device, first drawing content of the target graphical element in the specified display area comprises:
displaying, by the first terminal device, the first drawing content of the target graphical element at a second layer of the specified display area, wherein the second layer is located above the first layer.

7. The method according to any one of claims 1 to 6, wherein the displaying, by the first terminal device, first drawing content of the target graphical element in the specified display area comprises:
generating, by the first terminal device, a first target graphical element drawing instruction based on the first drawing event information; and
displaying, by the first terminal device, the first drawing content of the target graphical element in the specified display area according to the first target graphical element drawing instruction.

8. The method according to claim 7, wherein before the displaying, by the first terminal device, first drawing content of the target graphical element in the specified display area, the method further comprises:
drawing, by the first terminal device, a screen image based on a target graphical element object in a graphical element display queue and a preset period, and refreshing the screen image on the display screen, to enable second drawing content of the target graphical element to be displayed in the specified display area, wherein
the target graphical element object is used to maintain target graphical element drawing information of the target graphical element, the target graphical element object comprises second target graphical element drawing information, and the second target graphical element drawing information is used to draw the second drawing content.

9. The method according to claim 8, wherein the displaying, by the first terminal device, the first drawing content of the target graphical element in the specified display area according to the first target graphical element drawing instruction comprises:
generating, by the first terminal device, first target graphical element drawing information according to the first target graphical element drawing instruction, wherein the first target graphical element drawing information is used to draw the first drawing content;
updating, by the first terminal device, the generated first target graphical element drawing information into the target graphical element object in the graphical element display queue; and
drawing, by the first terminal device, the screen image based on the target graphical element object in the graphical element display queue and the preset period, and refreshing the screen image on the display screen, to enable the first drawing content and the second drawing content of the target graphical element to be displayed in the specified display area.

10. The method according to claim 8 or 9, wherein the method further comprises:
performing, by the first terminal device, life cycle management for the target graphical element object in the graphical element display queue;
when the first terminal device determines that a life cycle of the target graphical element object expires, generating, by the first terminal device, a target graphical element deletion instruction; and
deleting, by the first terminal device, the target graphical element object in the graphical element display queue according to the target graphical element deletion instruction.

11. The method according to any one of claims 1 to 10, wherein the first drawing operation comprises at least one or a combination of the following: a press operation, a drag operation, an uplift operation, a tap operation, a double-tap operation, an undo operation, and a delete operation.

12. The method according to claim 11, wherein
when the first drawing operation is the undo operation, the first drawing content is deleting drawing content corresponding to a second drawing operation, wherein the second drawing operation is n drawing operations performed by the user on the target graphical element before the first drawing operation, and n is an integer greater than or equal to 1; and
when the first drawing operation is the delete operation, the first drawing content is deleting drawing content corresponding to a third drawing operation, wherein the third drawing operation is all drawing operations performed by the user on the target graphical element before the first drawing operation.

13. A live streaming interaction method, comprising:
receiving, by a comment server, first drawing event information from a first terminal device;
generating, by the comment server, a first target graphical element drawing instruction based on the first drawing event information, wherein the first target graphical element drawing instruction instructs to display first drawing content of a target graphical element, and the first drawing content is drawing content corresponding to a first drawing operation performed by a user of the first terminal device on the target graphical element; and
sending, by the comment server, the first target graphical element drawing instruction to a second terminal device.

14. The method according to claim 13, wherein the first drawing event information comprises a first drawing event identifier, a first live streaming timestamp, and an identifier of the target graphical element, wherein
the first drawing event identifier represents the first drawing operation, the first live streaming timestamp represents play time of a live video played by the first terminal device when the user performs the first drawing operation, and the identifier of the target graphical element represents that the first drawing operation corresponds to the target graphical element; and
the first target graphical element drawing instruction comprises the first live streaming timestamp and the identifier of the target graphical element.

15. The method according to claim 14, wherein the generating, by the comment server, a first target graphical element drawing instruction based on the first drawing event information comprises:
determining, by the comment server, a type of the target graphical element based on the identifier of the target graphical element comprised in the first drawing event information; and
generating, by the comment server, the first target graphical element drawing instruction based on the type of the target graphical element and the first drawing event identifier.

16. The method according to claim 14 or 15, wherein the first drawing event information further comprises a location that a cursor or a touch point has in a specified display area of a display screen of the first terminal device when the user performs the first drawing operation, wherein the specified display area is a location for displaying the live video; and
the generating, by the comment server, a first target graphical element drawing instruction based on the first drawing event information comprises:
generating, by the comment server, vertex coordinates of the target graphical element based on the location that the cursor or the touch point has in the specified display area; and
generating, by the comment server, the first target graphical element drawing instruction comprising the vertex coordinates.

17. The method according to any one of claims 14 to 16, wherein before the receiving, by a comment server, first drawing event information from a first terminal device, the method further comprises:
allocating, by the comment server, a drawing identifier to the first terminal device, wherein the drawing identifier is used to generate the identifier of the target graphical element; and
sending, by the comment server, the drawing identifier to the first terminal device.

18. The method according to any one of claims 14 to 17, wherein after the comment server generates the first target graphical element drawing instruction, the method further comprises:
generating, by the comment server, first target graphical element drawing information according to the first target graphical element drawing instruction;
updating, by the comment server, the first target graphical element drawing information into a target graphical element object, wherein the target graphical element object is configured to maintain target graphical element drawing information of the target graphical element;
performing, by the comment server, life cycle management for the target graphical element object;
when the comment server determines that a life cycle of the target graphical element object expires, generating, by the comment server, a target graphical element deletion instruction; and
deleting, by the comment server, the target graphical element object according to the target graphical element deletion instruction, and sending the target graphical element deletion instruction to a second terminal device.

19. A live streaming interaction method, comprising:
displaying, by a second terminal device, a live video in a specified display area of a display screen;
receiving, by the second terminal device, a first target graphical element drawing instruction from a comment server, wherein the first target graphical element drawing instruction instructs to display first drawing content of a target graphical element, and the first drawing content is drawing content corresponding to a first drawing operation performed by a user of a first terminal device on the target graphical element; and
displaying, by the second terminal device, the first drawing content of the target graphical element in the specified display area according to the first target graphical element drawing instruction.

20. The method according to claim 19, wherein the first target graphical element drawing instruction comprises a first live streaming timestamp and an identifier of the target graphical element; and
the first live streaming timestamp represents play time of a live video played by the first terminal device when the user performs the first drawing operation, and the identifier of the target graphical element represents that the first drawing operation corresponds to the target graphical element.

21. The method according to claim 20, wherein the displaying, by the second terminal device, the first drawing content of the target graphical element in the specified display area according to the first target graphical element drawing instruction comprises:
determining, by the second terminal device, a drawing time period based on the live streaming timestamp;
generating, by the second terminal device, first target graphical element drawing information according to the first target graphical element drawing instruction when determining that the live video is not played to the drawing time period; and
displaying, by the second terminal device, the first drawing content of the target graphical element in the specified display area based on the first target graphical element drawing information.

22. The method according to claim 21, wherein before the displaying, by the second terminal device, the first drawing content of the target graphical element in the specified display area, the method further comprises:
drawing, by the second terminal device, a screen image based on a target graphical element object in a graphical element display queue and a preset period, and refreshing the screen image on the display screen, to enable second drawing content of the target graphical element to be displayed in the specified display area, wherein
the target graphical element object is used to maintain target graphical element drawing information of the target graphical element, the target graphical element object comprises second target graphical element drawing information, and the second target graphical element drawing information is used to draw the second drawing content.

23. The method according to claim 22, wherein the displaying, by the second terminal device, the first drawing content of the target graphical element in the specified display area based on the first target graphical element drawing information comprises:
updating, by the second terminal device, the generated first target graphical element drawing information into the target graphical element object in the graphical element display queue; and
drawing, by the second terminal device, the screen image based on the target graphical element object in the graphical element display queue and the preset period, and refreshing the screen image on the display screen, to enable the first drawing content and the second drawing content of the target graphical element to be displayed in the specified display area.

24. The method according to claim 22 or 23, wherein the method further comprises:
performing, by the second terminal device, life cycle management for the target graphical element object in the graphical element display queue;
when the second terminal device determines that a life cycle of the target graphical element object expires, generating, by the second terminal device, a first target graphical element deletion instruction; and
deleting, by the second terminal device, the target graphical element object in an image display queue according to the first target graphical element deletion instruction.

25. The method according to any one of claims 22 to 24, wherein the method further comprises:
receiving, by the second terminal device, a second target graphical element deletion instruction from the comment server, wherein the second target graphical element deletion instruction instructs to delete the target graphical element object; and
deleting, by the second terminal device, the target graphical element object according to the second target graphical element deletion instruction.

26. The method according to any one of claims 22 to 25, wherein the first target graphical element drawing instruction further comprises vertex coordinates, and the first target graphical element drawing information comprises the vertex coordinates; and
the drawing, by the second terminal device, the screen image based on the target graphical element object in the graphical element display queue comprises:
determining, by the second terminal device, a drawing location in the specified display area based on the vertex coordinates comprised in the target graphical element drawing information in the target graphical element object; and
generating, by the second terminal device, the screen image based on the drawing location, wherein the drawing location in the screen image comprises the first drawing content of the target graphical element.

27. The method according to any one of claims 19 to 26, wherein
the displaying, by a second terminal device, a live video in a specified display area comprises:
displaying, by the second terminal device, the live video at a first layer of the specified display area; and
the displaying, by the second terminal device, the first drawing content of the target graphical element in the specified display area comprises:
displaying, by the second terminal device, the first drawing content of the target graphical element at a second layer of the specified display area, wherein the second layer is located above the first layer.

28. A first terminal device, comprising:
a communication unit, configured to receive and send data; and
a processing unit, configured to implement the method according to any one of claims 1 to 12 by using the communication unit.

29. A comment server, comprising:
a communication unit, configured to receive and send data; and
a processing unit, configured to implement the method according to any one of claims 13 to 18 by using the communication unit.

30. A second terminal device, comprising:
a communication unit, configured to receive and send data; and
a processing unit, configured to implement the method according to any one of claims 19 to 27 by using the communication unit.

31. A communication system, comprising:
a first terminal device, configured to implement the method according to any one of claims 1 to 12;
a comment server, configured to implement the method according to any one of claims 13 to 18; and
a second terminal device, configured to implement the method according to any one of claims 19 to 27.

32. A computer program, wherein when the computer program is run on a computer, the computer is enabled to perform the method according to any one of claims 1 to 27.

33. A computer-readable storage medium, wherein the computer-readable storage medium stores a computer program; and when the computer program is executed by a computer, the computer is enabled to perform the method according to any one of claims 1 to 27.

34. A chip, wherein the chip is configured to read a computer program stored in a memory, to perform the method according to any one of claims 1 to 27.
